# EUROPÄISCHE PATENTSCHRIFT

(11) **EP 4 002 533 B1**
(45) Veröffentlichungstag und Bekanntmachung des Hinweises auf die Patenterteilung: **14.06.2023**
(21) Anmeldenummer: 21159734.9
(22) Anmeldetag: 26.02.2021
(51) Int. Cl.: H01M 8/24, B65G 57/02, B65G 57/03, B65G 47/51, B65G 57/30, B65G 60/00, H01M 8/2404

(54) **EINRICHTUNG UND VERFAHREN ZUM STAPELN VON ZELLKOMPONENTEN UND VORRICHTUNG UND VERFAHREN ZUM HERSTELLEN EINES BRENNSTOFFZELLENSCHICHTAUFBAUS**
DEVICE AND METHOD FOR STACKING CELL COMPONENTS AND DEVICE AND METHOD FOR MANUFACTURING A FUEL CELL STACK
DISPOSITIF ET PROCÉDÉ D'EMPILAGE DES COMPOSANTS DE PILE ET DISPOSITIF ET PROCÉDÉ DE FABRICATION D'UNE STRUCTURE EN COUCHE DE PILE À COMBUSTIBLE

(30) Priorität: 16.11.2020 DE 102020130242
(43) Veröffentlichungstag der Anmeldung: 25.05.2022
(73) Patentinhaber: Grob-Werke GmbH & Co. KG, 87719 Mindelheim (DE)
(72) Erfinder: Janusch, Tim, 87746 Erkheim (DE); Michl, Karl Rudolf, 87746 Erkheim (DE)
(74) Vertreter: KASTEL Patentanwälte PartG mbB

(56) Entgegenhaltungen:
- WO-A1-2005/067085
- WO-A1-2020/216758
- KR-A- 20150 079 461
- US-A1- 2008 138 185
- US-A1- 2015 364 785

## Beschreibung

Die Erfindung betrifft eine Zellkomponentenabstapeleinrichtung zum vertikalen Abstapeln vereinzelter Zellkomponenten an einer Stapelstation im Zuge des Herstellens eines Brennstoffzellenschichtaufbaus. Weiter betrifft die Erfindung eine Herstellvorrichtung zum Herstellen eines Brennstoffzellenschichtaufbaus mit wechselweise angeordneten platten- oder membranförmig ausgebildeten ersten und zweiten Zellkomponenten. Weiter betrifft die Erfindung ein Zellkomponentenabstapelverfahren zum vertikalen Abstapeln vereinzelter Zellkomponenten an einer Stapelstation im Zuge des Herstellens eines Brennstoffzellenschichtaufbaus. Weiter betrifft die Erfindung ein Herstellverfahren zum Herstellen eines Brennstoffzellenschichtaufbaus mit wechselweise angeordneten platten- oder membranförmig ausgebildeten ersten und zweiten Zellkomponenten. Schließlich betrifft die Erfindung ein Computerprogramm und eine Steuerung zur Verwendung in derartigen Vorrichtungen und Verfahren.

Ein Stapel ist ein ordentlich aufgeschichteter Stoß einer Menge gleicher Dinge oder eine Menge ordentlich übereinandergelegter gleicher Dinge. Unter Aufstapeln wird das Bilden eines Stapels verstanden. Unter Abstapeln wird das Abgeben oder Entnehmen von einem Stapel verstanden. Ein Abstapler ist eine Einrichtung zum Abstapeln. Eine Zellkomponentenabstapeleinrichtung ist eine Einrichtung, die dazu ausgebildet ist, Zellkomponenten zu einem Stapel aufzustapeln und einzelne Zellkomponenten von dem Stapel Zellkomponenten vereinzelt abzugeben. Entsprechend ist ein Zellkomponentenabstapelverfahren ein Verfahren, bei dem Zellkomponenten zu einem Stapel aufgestapelt werden und einzelne Zellkomponenten von dem Stapel vereinzelt abgegeben werden.

Die Erfindung liegt auf dem Gebiet von Schichtaufbauten im Zuge der Herstellung von Brennstoffzellen. Bevorzugte Ausführungsformen der Erfindung betreffen eine Einrichtung und ein Verfahren zum vertikalen Abstapeln vereinzelter Zellkomponenten an einer Stapelstation im Zuge des Herstellens eines Brennstoffzellenschichtaufbaus. Weitere bevorzugte Ausführungsformen der Erfindung betreffen eine Vorrichtung und ein Verfahren zum Herstellen eines Brennstoffzellenschichtaufbaus mit wechselweise angeordneten platten- oder membranförmig ausgebildeten ersten und zweiten Zellkomponenten. Besonders bevorzugte Ausgestaltungen der Erfindung betreffen eine Vorrichtung und ein Verfahren zur Einbringung von BPP in den Stackingprozess einer PEMFC sowie eine Vorrichtung und ein Verfahren zur Durchführung dieses Stackingprozesses.

Zum technologischen Hintergrund und zur Begriffsklärung wird auf folgende Literaturstellen verwiesen:
[1] Brennstoffzelle - Wikipedia, heruntergeladen am 16.11.2020 unter dem Internetlink https://de.wikipedia.org/wiki/Brennstoffzelle
[2] Polymerelektrolytbrennstoffzelle - Wikipedia, heruntergeladen am 13.11.2020 unter dem Internetlink https://de.wikipedia.org/wiki/Polymerelektrolytbrennstoffzelle
[3] Proton-exchange membrane fuel cell - Wikipedia, heruntergeladen am 13.11.2020 unter dem Internetlink https://en.wikipedia.org/wiki/Proton-exchange_membrane fuel_cell
[4] Membrane electrode assembly - Wikipedia, heruntergeladen am 13.11.2020 unter dem Internetlink https://en.wikipedia.org/wiki/Membrane electrode_assembly
[5] US 2008/0138185 A1
[6] unveröffentlichte europäische Patentanmeldung mit der Anmeldenummer EP20176004.8
[7] WO 2020/216758 A1
[8] unveröffentlichte deutsche Patentanmeldung mit der Anmeldenummer DE10 2020 133 413.3

Aus der Literaturstelle [5] sind Vorrichtungen und Verfahren zum Herstellen eines Brennstoffzellenschichtaufbaus bekannt, bei denen Membranelektrodenanordnungen (kurz MEA) und Separatoren aus jeweiligen Liefereinheiten abwechselnd in eine Übertragungseinheit eingebracht und dann in dieser Reihenfolge nach unten auf eine Platte einer Stapelvorrichtung abgesenkt werden, wo dann ein Zellstapel zum Bilden des Brennstoffzellenschichtaufbaus gebildet wird.

Die Erfindung hat sich zur Aufgabe gestellt, bei der Herstellung von Brennstoffzellen zu verwendende Einrichtungen, Vorrichtungen und Verfahren zu schaffen, die hinsichtlich Taktzeitoptimierung, Zuverlässigkeit und Anwendbarkeit in bestehenden oder zukünftigen Herstellanlagen verbessert sind.

Zum Lösen dieser Aufgabe schafft die Erfindung die Einrichtung, die Verfahren und die Vorrichtung gemäß den unabhängigen Ansprüchen.

Vorteilhafte Ausgestaltungen sind Gegenstand der Unteransprüche.

Die Erfindung schafft gemäß einem ersten Aspekt davon eine Zellkomponentenabstapeleinrichtung zum vertikalen Abstapeln vereinzelter Zellkomponenten an einer Stapelstation im Zuge des Herstellens eines Brennstoffzellenschichtaufbaus, umfassend wenigstens einen Vertikalabstapler mit einem Vertikalmagazin zum Aufnehmen einer Mehrzahl der Zellkomponenten in einer vertikalen Anordnung und mit einer Auf- und Abbewegungseinrichtung zum Auf- und Abbewegen der Zellkomponenten in dem Vertikalmagazin und zum Abstapeln vereinzelter Zellkomponenten in vertikaler Richtung,
einer Anlieferungseinrichtung zum Anliefern vereinzelter Zellkomponenten an einer Befüllstation zu dem Vertikalabstapler,
wobei der Vertikalabstabler dazu ausgebildet ist, an der Befüllstation das Vertikalmagazin durch einzelnes Aufnehmen der Zellkomponenten und Bewegen mittels der Auf- und Abbewegungseinrichtung zu befüllen, und
wobei der Vertikalabstapler weiter dazu ausgebildet ist, zwischen der Befüllstation und der Stapelstation bewegt zu werden und an der Stapelstation die Zellkomponenten einzeln durch Abwärtsbewegen in vertikaler Richtung abzugeben.

Vorzugsweise hat der Vertikalabstapler eine selbsttragende Gehäuse- oder Rahmenkonstruktion.

Vorzugsweise hat der Vertikalabstapler wenigstens ein an einer ersten Seite des Vertikalmagazins in vertikaler Richtung bewegbares erstes Fördermittel und wenigstens ein an einer der ersten Seite gegenüberliegenden zweiten Seite in vertikaler Richtung synchron bewegbares zweites Fördermittel, wobei die Fördermittel jeweils eine Reihe von Erfassungselementen zum Erfassen und Halten der Zellkomponenten aufweisen. Das Fördermittel ist insbesondere ein Zugmittel, wie z.B. ein Band, eine Kette, ein Seil, ein Riemen oder dergleichen. Insbesondere sind formschlüssige Fördermittel vorgesehen, die eine exakte Positionierung ohne Schlupf ermöglichen. Besonders bevorzugt ist das Zugmittel ein Transportband, mehr insbesondere ein Zahnriemen.

Vorzugsweise hat der Vertikalabstapler wenigstens einen an einer ersten Seite des Vertikalmagazins in einer vertikalen Richtung bewegbaren ersten Zahnriemen und wenigstens einen an einer der ersten Seite gegenüberliegenden zweiten Seite in einer vertikalen Richtung synchron bewegbaren zweiten Zahnriemen.

Vorzugsweise hat der Vertikalabstapler einen Aktor zum Antreiben der Auf- und Abbewegung oder eine Kupplung zum Ankoppeln eines Aktors zum Antreiben der Auf- und Abbewegung.

Vorzugsweise hat der Vertikalabstapler eine Positioniereinrichtung zum Positionieren des Vertikalmagazins an der Befüllstation und/oder an der Stapelstation.

Vorzugsweise hat der Vertikalabstapler ein Bremssystem zum Abbremsen zumindest der Abwärtsbewegung der Zellkomponenten in dem Vertikalmagazin.

Vorzugsweise hat der Vertikalabstapler wenigstens eine Anlage- und/oder Führungseinrichtung zum Positionieren und/oder Führen der Zellkomponenten beim Füllen und/oder Auf- und Abbewegen.

Vorzugsweise hat der Vertikalabstapler eine zumindest bereichsweise trichterförmige vertikale Führungseinrichtung zum Positionieren der Zellkomponenten in Anlieferrichtung.

Vorzugsweise hat der Vertikalabstapler ein Verschlusssystem zum lösbaren Fixieren der oder wenigstens einer Anlage- und Führungseinrichtung.

Es ist bevorzugt, dass das Vertikalmagazin im Wesentlichen quaderförmig ausgebildet ist. Es ist bevorzugt, dass an einer ersten vertikal verlaufenden Seite und an einer dieser gegenüberliegenden zweiten vertikal verlaufenden Seite des Vertikalmagazins die Auf- und Abbewegungseinrichtung angeordnet ist. Es ist bevorzugt, dass an einer zu der ersten und zweiten quer verlaufenden dritten und/oder vierten vertikal verlaufenden Seite wenigstens eine Anlage- oder Führungseinrichtung entfernbar angeordnet ist, gegen die die in dem Vertikalmagazin aufgenommenen Zellkomponenten anliegen.

Vorzugsweise hat die Anlieferungseinrichtung wenigstens eine Aufnahmeeinheit zum positionierten Aufnehmen des Vertikalabstaplers. Mit anderen Worten ist die Aufnahmeeinheit dazu ausgebildet, beim Aufnehmen eines Vertikalabstaplers diesen korrekt zu positionieren.

Vorzugsweise hat die Anlieferungseinrichtung eine oder mehrere weitere Aufnahmeeinheiten zum positionierten Aufnehmen je eines weiteren Vertikalabstaplers.

Die Anlieferung kann an einem oberen Ende des Vertikalabstaplers erfolgen, wobei die Zellkomponenten zum Befüllen abwärts bewegt werden. Die Anlieferungseinrichtung kann dann auch zum Anliefern der Zellkomponenten zu dem Vertikalabstabler von oben ausgebildet sein. Vorzugsweise ist die Anlieferungseinrichtung dazu ausgebildet, die Zellkomponenten an einem unteren Ende des Vertikalabstaplers anzuliefern, wobei dann weiter vorzugsweise in dem Vertikalabstapler zum Füllen ein Aufwärtsbewegen der bereits darin befindlichen Zellkomponenten erfolgt. Vorzugsweise ist die Anlieferungseinrichtung zum seitlichen Anliefern der Zellkomponenten ausgebildet.

Vorzugsweise hat die Anlieferungseinrichtung ein Zuführfördermittel zum seitlichen Anliefern der Zellkomponenten zu dem wenigstens einen Vertikalabstapler. Das Zuführfördermittel ist vorzugsweise ausgeführt als vorzugsweise formschlüssiges Zugmittel, wie Kette, Band oder Riemen, und ist besonders bevorzugt ein Zuführband.

Vorzugsweise hat die Anlieferungseinrichtung ein zumindest bereichsweise trichterförmiges Führungssystem zum Positionieren der Zellkomponenten in Richtung quer zur Anlieferrichtung beim Anliefern.

Vorzugsweise hat die Anlieferungseinrichtung eine Reihe formschlüssiger Erfassungselemente, die zum formschlüssigen Erfassen der Zellkomponenten ausgebildet und zum Anliefern der Zellkomponenten hin zu dem Vertikalabstapler bewegbar sind.

Vorzugsweise hat die Anlieferungseinrichtung ein Antriebssystem für die Anlieferbewegung.

Vorzugsweise hat die Anlieferungseinrichtung wenigstens einen Aktor zum Antreiben der Auf-und Abbewegung der Zellkomponenten in dem Vertikalmagazin und eine wenigstens eine vorzugsweise schaltbare Kupplung zum Koppeln des Aktors mit der Auf- und Abbewegungseinrichtung des wenigstens einen Vertikalabstaplers.

Es ist bevorzugt, dass die Anlieferungseinrichtung dazu ausgebildet ist, einen ersten Vertikalabstapler an einer ersten Aufnahmeeinheit und einen zweiten Vertikalabstapler an einer zweiten Aufnahmeeinheit aufzunehmen und nacheinander zu befüllen.

Es ist bevorzugt, dass die Anlieferungseinrichtung dazu ausgebildet ist, mehrere Vertikalabstapler an in Anlieferrichtung nacheinander angeordneten Aufnahmeeinheiten parallel zu befüllen.

Bei einer Ausgestaltung ist die Anlieferungseinrichtung dazu ausgebildet, den wenigstens einen Vertikalabstapler von oben zu befüllen. Bei anderen Ausgestaltungen ist die Anlieferungseinheit dazu ausgebildet, den wenigstens einen Vertikalabstapler von der Seite zu befüllen.

Gemäß einem weiteren Aspekt schafft die Erfindung eine Herstellvorrichtung zum Herstellen eines Brennstoffzellenschichtaufbaus mit wechselweise angeordneten platten- oder membranförmig ausgebildeten ersten und zweiten Zellkomponenten, umfassend:
eine Stapelstation mit wenigstens einer Stapelvorrichtung zum Aufeinanderstapeln der ersten und der zweite Zellkomponente abwechselnd aufeinander,
einen zwischen wenigstens einer Befüllstation und der Stapelstation bewegbaren Vertikalabstapler zum Aufnehmen einer Mehrzahl von ersten Zellkomponenten in einer vertikalen Anordnung mit einer Auf- und Abbewegungseinrichtung zum Auf- und Abbewegen der ersten Zellkomponenten und zum Abstapeln vereinzelter erster Zellkomponenten in vertikaler Richtung zu der Stapelvorrichtung, und einem Seitenzuführsystem zum seitlichen Zuführen vereinzelter zweiter Zellkomponenten zu der Stapelvorrichtung.

Vorzugsweise umfasst die Herstellvorrichtung eine Zellkomponentenabstapeleinrichtung nach einer der voranstehenden Ausgestaltungen zum Bereitstellen des mit ersten Zellkomponenten befüllten Vertikalabstaplers.

Vorzugsweise hat die Herstellvorrichtung eine Mehrzahl von Stapelvorrichtungen, die im Kreislauf zwischen der Stapelstation und wenigstens einer weiteren Bearbeitungsstation zum Weiterbearbeiten des in der Stapelvorrichtung gestapelten Brennstoffzellenschichtaufbaus bewegbar sind.

Vorzugsweise hat die Herstellvorrichtung eine Mehrzahl von Vertikalabstaplern, die im Kreislauf zwischen einer Aufnahmeeinheit an der Stapelstation und Aufnahmeeinheiten an der Befüllstation bewegbar sind.

Vorzugsweise hat die Herstellvorrichtung eine Auflagestation zum Auflegen von Randkomponenten des Zellschichtaufbaus an der Stapelvorrichtung.

Vorzugsweise hat die Herstellvorrichtung eine Entnahmestation zum Entnehmen des Brennstoffzellenschichtaufbaus aus der Stapelvorrichtung.

Vorzugsweise hat die Herstellvorrichtung wenigstens eine Pressstation mit einer Presse zum Pressen des Brennstoffzellenschichtaufbaus.

Gemäß einem weiteren Aspekt schafft die Erfindung ein Zellkomponentenabstapelverfahren zum vertikalen Abstapeln vereinzelter Zellkomponenten an einer Stapelstation im Zuge des Herstellens eines Brennstoffzellenschichtaufbaus, umfassend:
a) Bereitstellen wenigstens eines Vertikalabstaplers mit einem Vertikalmagazin zum Aufnehmen einer Mehrzahl der Zellkomponenten in einer vertikalen Anordnung und mit einer Auf- und Abbewegungseinrichtung zum Auf- und Abbewegen der Zellkomponenten in dem Vertikalmagazin und zum Abstapeln vereinzelter Zellkomponenten in vertikaler Richtung,
b) Füllen des Vertikalabstaplers an einer Befüllstation mit vereinzelten Zellkomponenten unter Bewegung bereits aufgenommener Zellkomponenten in dem Vertikalmagazin,
c) Bewegen des befüllten Vertikalabstaplers zu einer Stapelstation, und
d) Abwärtsbewegen der Auf- und Abbewegungseinrichtung zum Abstapeln der einzelnen Zellkomponenten an der Stapelstation.

Vorzugsweise ist die Zellkomponentenabstapeleinrichtung gemäß einer der oben näher erläuterten Ausgestaltungen zum Durchführen des Zellkomponentenabstapelverfahrens ausgebildet.

Vorzugsweise ist das Zellkomponentenabstapelverfahren durchführbar mit einer Zellkomponentenabstapeleinrichtung nach einem der oben näher erläuterten Ausgestaltungen oder wird damit durchgeführt.

Vorzugsweise umfasst das Zellkomponentenabstapelverfahren den Schritt:
Positionieren der Zellkomponenten in Richtung quer zu einer Zuführungsrichtung beim Zuführen der Zellkomponenten zu dem Vertikalabstapler in Schritt b).

Vorzugsweise umfasst das Zellkomponentenabstapelverfahren den Schritt:
Positionieren der Zellkomponenten in Zuführungsrichtung beim Aufwärtsbewegen der Zellkomponenten in dem Vertikalstapler.

Vorzugsweise umfasst das Zellkomponentenabstapelverfahren den Schritt:
Prüfen der Zellkomponenten und Entfernen einer fehlerhaften Zellkomponente an der Befüllstation oder beim Zuführen zu der Befüllstation.

Vorzugsweise umfasst das Zellkomponentenabstapelverfahren den Schritt:
Einfügen einer Zellkomponente auf einer aufgrund eines Entfernens einer fehlerhaften Zellkomponente leeren Stelle in den Vertikalstapler.

Vorzugsweise umfasst das Zellkomponentenabstapelverfahren den Schritt:
manuelles oder automatisches Betätigen eines Verschlusssystem des Vertikalstaplers zum Einfügen einer Zellkomponente auf einer aufgrund eines Entfernens einer fehlerhaften Zellkomponente leeren Stelle in den Vertikalstapler.

Vorzugsweise umfasst das Zellkomponentenabstapelverfahren den Schritt:
Bewegen einer neuen Zellkomponente mittels eines Vertikalhandhabungssystems auf die Höhe einer leeren Stelle des Vertikalstaplers zum Füllen derselben. Das Vertikalhandhabungssystem ist insbesondere ein Hubsystem zum Anheben einer weiteren angelieferten Zellkomponente auf das Niveau der leeren Stelle.

Vorzugsweise umfasst das Zellkomponentenabstapelverfahren den Schritt:
Positionieren des Vertikalstaplers mittels einer Positioniereinrichtung, insbesondere einer Nullpunktspannvorrichtung, an wenigstens einer Aufnahmeeinheit der Befüllstation und an wenigstens einer Aufnahmeeinheit der Stapelstation.

Vorzugsweise umfasst das Zellkomponentenabstapelverfahren den Schritt:
Bereitstellen eines weiteren Vertikalabstaplers an einer weiteren Aufnahmeinheit der Befüllstation bereits während des Befüllens des vorherigen Vertikalabstaplers.

Vorzugsweise umfasst das Zellkomponentenabstapelverfahren den Schritt:
paralleles Befüllen mehrerer Vertikalabstapler an unterschiedlichen in Anlieferrichtung aufeinanderfolgender Aufnahmeeinheiten der Befüllstation.

Gemäß einem weiteren Aspekt schafft die Erfindung ein Herstellverfahren zum Herstellen eines Brennstoffzellenschichtaufbaus mit wechselweise angeordneten platten- oder membranförmig ausgebildeten ersten und zweiten Zellkomponenten, umfassend:
e) Bereitstellen einer Stapelvorrichtung an einer Stapelstation,
f) vertikales Abstapeln einer ersten Zellkomponente im Wechsel mit einem seitlichen Zuführen einer zweiten Zellkomponente auf der Stapelvorrichtung,
g) Transport der Stapelvorrichtung mit dem so gebildeten Zellschichtaufbau zur Weiterverarbeitung und Entnahme des Zellschichtaufbaus,
h) Rücktransport der Stapelvorrichtung zu der Stapelstation.

Die oben erläuterten Ausgestaltungen der Herstellvorrichtung sind vorzugsweise dazu ausgebildet, das Herstellverfahren durchzuführen. Vorzugsweise ist das Herstellverfahren mit einer Herstellvorrichtung nach einer der oben genannten Ausgestaltungen durchführbar oder wird damit durchgeführt.

Vorzugsweise umfasst das Herstellverfahren den Schritt:
Verwenden mehrerer Stapelvorrichtungen und Bewegen der Stapelvorrichtungen im Kreislauf zwischen der Stapelstation und wenigstens einer weiteren Bearbeitungsstation.

Vorzugsweise umfasst das Herstellverfahren den Schritt:
Verwenden mehrerer Vertikalabstapler und Bewegen der Vertikalabstapler im Kreislauf zwischen der Stapelstation und Aufnahmeeinheiten der Befüllstation.

Gemäß einem weiteren Aspekt schafft die Erfindung ein Computerprogramm, umfassend maschinenlesbare Steueranweisungen, die, wenn in eine Steuereinheit einer Zellkomponentenabstapeleinrichtung nach einer der voranstehenden Ausgestaltungen geladen, diese veranlassen, das Zellkomponentenabstapelverfahren nach einer der voranstehenden Ausgestaltungen durchzuführen.

Gemäß einem weiteren Aspekt schafft die Erfindung ein Computerprogramm, umfassend maschinenlesbare Steueranweisungen, die, wenn in eine Steuerung einer Herstellvorrichtung nach einer der voranstehenden Ausgestaltungen geladen, diese veranlassen, das Herstellverfahren nach einer der voranstehenden Ausgestaltungen durchzuführen.

Gemäß einem weiteren Aspekt schafft die Erfindung eine Steuerung mit einer Steuereinheit für eine Zellkomponentenabstapeleinrichtung nach einer der voranstehenden Ausgestaltungen, wobei die Steuereinheit dazu ausgebildet ist, die Zellkomponentenabstapeleinrichtung zum Durchführen des Zellkomponentenabstapelverfahrens nach einer der voranstehenden Ausgestaltungen anzusteuern.

Gemäß einem weiteren Aspekt schafft die Erfindung eine Steuerung ausgebildet für eine Herstellvorrichtung nach einer der voranstehenden Ausgestaltungen, wobei die Steuerung dazu eingerichtet ist, die Herstellvorrichtung zum Durchführen des Herstellverfahrens nach einer der voranstehenden Ausgestaltungen anzusteuern. Vorzugsweise weist die Steuerung die voranstehend definierte Steuereinheit auf.

Die Zellkomponentenabstapeleinrichtung weist vorzugsweise die Steuereinheit auf, die dazu ausgebildet ist, die Zellkomponentenabstapeleinrichtung zum Durchführen des Zellkomponentenabstapelverfahrens nach einer der voranstehenden Ausgestaltungen anzusteuern.

Die Herstellvorrichtung weist vorzugsweise die Steuerung gemäß einer der zuvor genannten Ausgestaltungen auf.

Im Unterschied zu den Vorrichtungen und Verfahren gemäß der Literaturstelle [5] werden bei Ausgestaltungen der Erfindung erste Zellkomponenten, insbesondere BPPs sortenrein in den Vertikalabstapler eingebracht, wobei dieser dann auf die Stapelvorrichtung aufgesetzt wird. Die zweiten Zellkomponenten, insbesondere MEAs, werden erst beim Abstapeln der ersten Zellkomponenten aus diesem Vertikalabstapler in die Stapelvorrichtung eingefügt, indem sie zwischen den Vertikalabstapler und die Stapelvorrichtung eingefügt werden.

Der Vertikalabstapler ist mit den ersten Zellkomponenten, insbesondere BPPs vorbefüllt, so dass beim eigentlichen Bilden des Brennstoffzellenschichtaufbaus Anlieferungseinheit nicht eingesetzt wird. Insbesondere wird die Anlieferungseinheit separat angeordnet, damit der Vertikalabstapler separat beladen werden kann. Durch diese Trennung werden lassen sich deutliche Taktzeitoptimierungen und Verbesserungen des Herstellablaufs erreichen.

Bei bevorzugten Ausgestaltungen der Zellkomponentenabstapeleinrichtung werden die ersten Zellkomponenten, insbesondere BPPs, im Gegensatz zu dem Verfahren der Literaturstelle [5] nicht seitlich eingeworfen, sondern beim Füllen des Vertikalmagazins von einem getakteten Zuführfördermittel, insbesondere Zuführband, vertikal in das Vertikalmagazin bewegt, insbesondere von dem getakteten Zuführband abgehoben. Dadurch werden Gefahren der Beschädigung der BPP beim Einwerfen, insbesondere durch mechanische Belastung der Kanten beim Auftreffen, und beim Gleiten infolge der Relativbewegung zwischen Mitnehmern des Zuführsystems von [5] vermieden. In [5] entsteht beim Einfügen der Zellkomponenten eine Relativbewegung der Kanten der Zellkomponenten mit Mitnehmern des Zuführsystems. Bei den Ausführungen des Vertikalabstaplers greift die Auf- und Abbewegungseinrichtung mit Mitnehmern sanft von unten oder oben ohne Relativgleiten an den ersten Zellkomponenten an.

Bei Ausgestaltungen der Erfindung ist ein Vertikalabstapler als mobiles transportables System mit einer separaten Befüllstation vorgesehen. Wenn bei der Herstellung des Brennstoffzellenschichtaufbaus die Zuführung der ersten Zellkomponenten der begrenzende Zeitfaktor ist, kann bei bevorzugten Ausgestaltungen der Zellkomponentenabstapeleinrichtung das Taktzeitpotential durch eine Erweiterung der Befüllstrategie von sequentiell auf parallel-sequentiell mit paralleler Befüllung mehrerer Vertikalabstapler vervielfacht werden, ohne die Gesamtanlage parallelisieren zu müssen. So kann eine Erhöhung der Herstellkapazität mit geringem Aufwand und mit geringen Kosten erreicht werden.

Bei bevorzugten Ausgestaltungen der Erfindung wird eine BPP-Zuführung als sortenreines System realisiert. Hierdurch kann eine N.i.O.-Strategie mit hohem Taktzeitpotential und hoher Prozesssicherheit bereits bei Bestückung des Vertikalabstaplers realisiert werden, die losgelöst ist vom eigentlichen Stackingprozess. Damit lassen sich Störungen des Stackingprozesses durch N.i.O-Komponenten vermeiden, solche sind beim Stackingprozess nicht vorhanden.

Bei bevorzugten Ausgestaltungen der Zellkomponentenabstapeleinrichtung werden die ersten Zellkomponenten bereits bei der Bestückung des Vertikalabstaplers einer ersten Vorausrichtung unterzogen. Dies erhöht die Prozesssicherheit und erhöht das Taktzeitpotential, insbesondere durch Verringerung der Ablagezeit.

Die Zuführung der ersten Zellkomponenten ist bei Ausgestaltungen der Zellkomponentenabstapeleinrichtung nicht an eine Art der Materialzuführung gebunden. Unabhängig von der Materialzuführung werden die ersten Zellkomponenten auf der Anlieferungseinrichtung, insbesondere einem Befüllband, angeordnet und definiert dem Vertikalabstapler zugeführt. Bei der [5] ist zwingend eine Materialanlieferung der ersten Zellkomponenten in einem speziellen Magazin vorgesehen. Im Gegensatz dazu können bei bevorzugten Ausgestaltungen der Zellkomponentenabstapeleinrichtung die ersten Zellkomponenten, insbesondere BPPs, sowohl aus Magazinen verarbeitet werden - z.B. durch Entnahme der BPPs mit einem Mehrfachgreifer aus Magazinen mit anschließendem Ablegen auf dem BPP-Zuführband - als auch mit einer direkten Band-Verkettung mit der BPP-Herstellung.

Insbesondere bei einer direkten Bandverkettung sind keine Zwischenlagen zwischen den BPPs notwendig, was einen erheblichen Kosten- und Umweltvorteil darstellt.

Vorteilhaften Ausgestaltungen der Erfindung liefern somit ein System, das für zukünftige

Anwendungen und höhere Ausbringungsmengen besser geeignet ist.
Wenngleich die bevorzugte Verwendung in der Herstellung von Schichtaufbauten für Brennstoffzellen liegt, können einige Ausführungsformen der Einrichtungen und Vorrichtungen zum Stapeln, Aufstapeln oder Abstapeln auch zum Stapeln, Aufstapeln bzw. Abstapeln von Komponenten anderer Schichtaufbauten, wie z.B. Batteriezellen oder dergleichen geeignet sein und auch hierfür verwendet werden. Der wechselweise Schichtaufbau einer ersten und einer zweiten Zellkomponente kann selbstverständlich neben den ersten und zweiten Zellkomponenten auch noch mehr Zellkomponenten enthalten. Zum Beispiel sind auch bei einem wechselhaften Schichtaufbau aus einer ersten bis vierten Zellkomponente die erste und zweite Zellkomponente wechselweise angeordnet, es kann auch noch eine dritte und vierte Zellkomponente dazwischen angeordnet sein.

Im Folgenden werden bevorzugte Ausgestaltungen der Erfindung anhand der beigefügten Zeichnung näher erläutert. Darin zeigt:
Fig. 1 ein schematisches Flussdiagramm eines Ausführungsbeispiels eines Herstellverfahrens zum Herstellen eines Brennstoffzellenschichtaufbaus mit wechselweise angeordneten platten- oder membranförmig ausgebildeten ersten und zweiten Zellkomponenten;
Fig. 2 eine schematische Seitenansicht eines Ausführungsbeispiels einer Herstellvorrichtung zum Herstellen des Brennstoffzellenschichtaufbaus;
Fig. 3 eine schematische Seitenansicht eines Ausführungsbeispiels einer Zellstapelabstapeleinrichtung zur Verwendung in dem Herstellverfahren von Fig. 1;
Fig. 4 eine schematische Draufsicht auf ein Ausführungsbeispiel der Herstellvorrichtung zur Darstellung einer möglichen Kombi-Station zum Herstellen des Brennstoffzellenschichtaufbaus;
Fig. 5 eine perspektivische Darstellung einer konkreten beispielhaften Ausgestaltung der Herstellvorrichtu ng
Fig. 6 eine seitliche Prinzipdarstellung der Herstellvorrichtung zur Verdeutlichung des Prinzips der Zuführung einer ersten Zellkomponente;
Fig. 7 eine perspektivische Ansicht eines Ausführungsbeispiels eines in der Herstellvorrichtung und der Zellkomponentenabstapeleinrichtung zu verwendenden Vertikalabstaplers;
Fig. 8 eine perspektivische Ansicht eines konkreten Ausführungsbeispiels der Zellkomponentenabstapeleinrichtung mit einer Anlieferungseinrichtung und einem Vertikalabstapler an einer Aufnahmeeinheit der Anlieferungseinrichtung;
Fig. 9 eine Detailansicht des Details IX von Fig. 8;
Fig. 10 eine Detailansicht des Details X von Fig. 8;
Fig. 11 eine perspektivische Ansicht der Anlieferungseinheit der Zellkomponentenabstapeleinrichtung von Fig. 8 ohne den Vertikalabstapler;
Fig. 12 eine Detailansicht des Details XII von Fig. 11;
Fig. 13 eine Modifikation der Zellkomponentenabstapeleinrichtung von Fig. 8, mit zwei Aufnahmeeinheiten und zwei Vertikalabstaplern; und
Fig. 14 noch eine Modifikation der Zellkomponentenabstapeleinrichtung von Fig. 8 mit vier Aufnahmeeinheiten und vier Vertikalabstaplern.

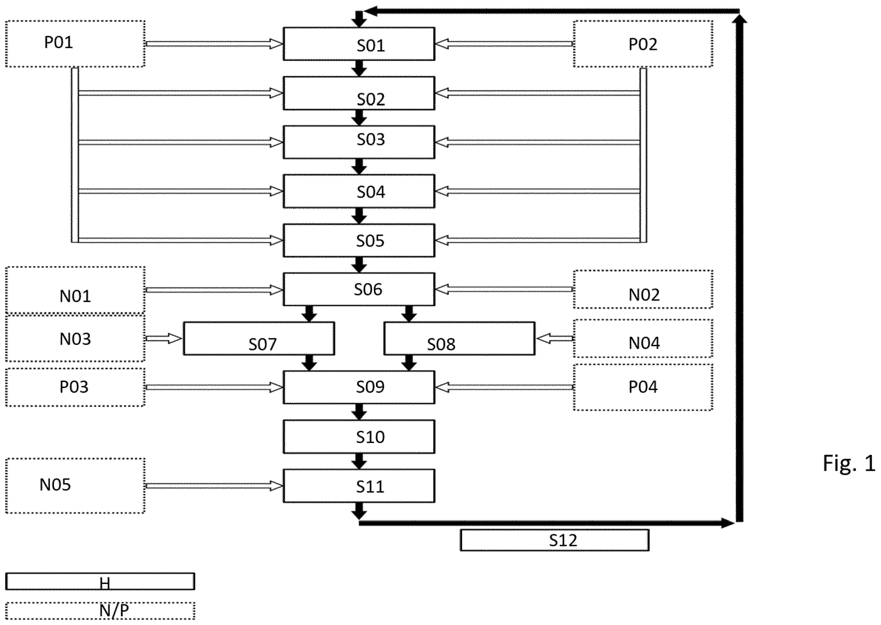

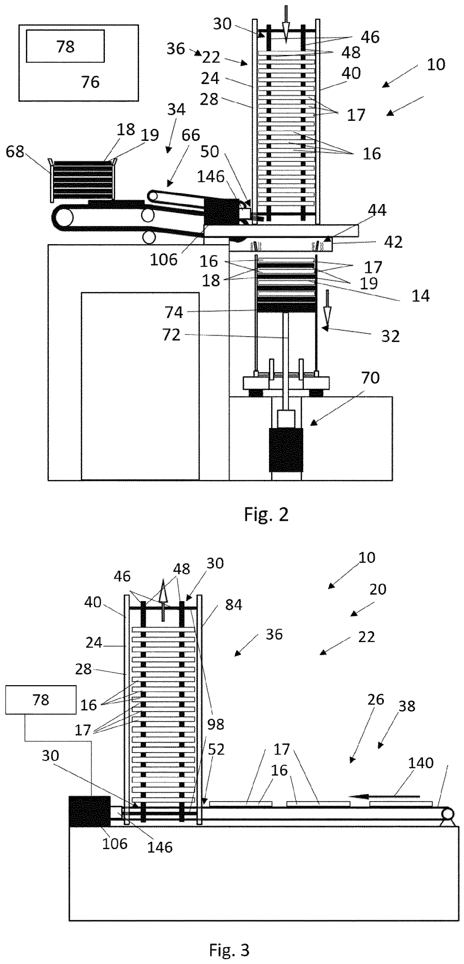

In Fig. 1 ist ein Ausführungsbeispiel für ein Herstellverfahren zum Herstellen eines Brennstoffzellenschichtaufbaus als Flussdiagramm dargestellt. Die Fig. 2 bis 6 zeigen Ausführungsbeispiele einer Herstellvorrichtung 10 zum Durchführen des Herstellverfahrens. Die Herstellvorrichtung 10 hat wenigstens eine in Fig. 2 und 4 bis 6 dargestellte Stapelstation 12, an der der Brennstoffzellenschichtaufbau 14 wenigstens aus ersten Zellkomponenten 16 und zweiten Zellkomponenten 18 wechselweise aufgebaut wird. Bevorzugte Ausgestaltungen der Herstellvorrichtung 10 umfassen weiter wenigstens eine in Fig. 3 dargestellte Befüllstation 20. Die Fig. 3, 8, 13 und 14 zeigen Ausführungsbeispiele einer Zellkomponentenabstapeleinrichtung 22 zur Verwendung bei dem Herstellverfahren, um erste Zellkomponenten 16 an der Stapelstation 12 der Herstellvorrichtung 10 bereitzustellen. Die übrigen Figuren zeigen unterschiedliche Details und Einheiten der Zellkomponentenabstapeleinrichtung 22.

Die Zellkomponentenabstapeleinrichtung 22 ist zum vertikalen Abstapeln vereinzelter erster Zellkomponenten 16 an der Stapelstation 12 der Herstellvorrichtung 10 im Zuge des Herstellens des Brennstoffzellenschichtaufbaus 14 ausgebildet. Hierzu ist die Zellkomponentenabstapeleinrichtung 22 auch zum Bilden eines Stapels erster Zellkomponenten 16 ausgebildet, von dem die ersten Zellkomponenten 16 an der Stapelstation 12 vereinzelt abgestapelt werden.

Die Zellkomponentenabstapeleinrichtung 22 weist wenigstens einen Vertikalabstapler 24 und eine Anlieferungseinrichtung 26 auf.

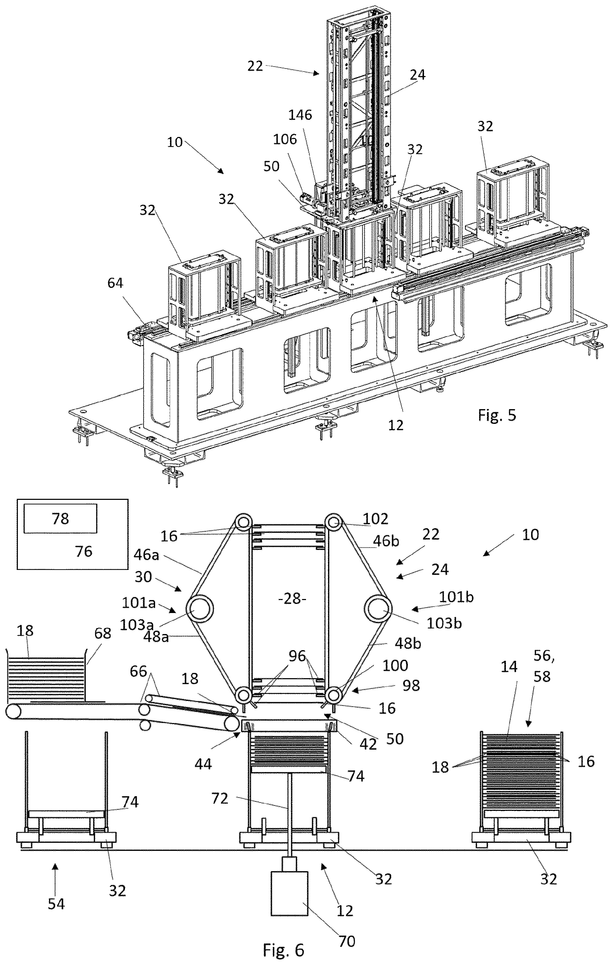

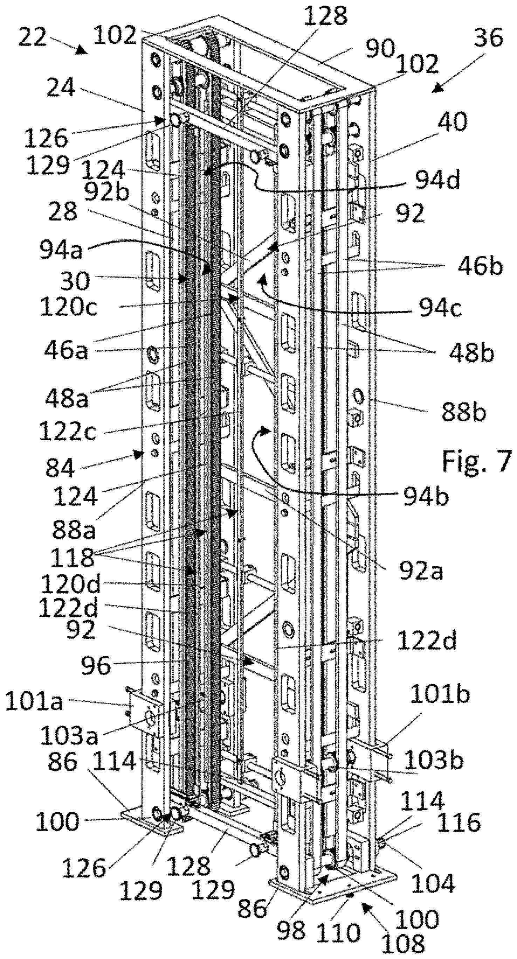

Der Vertikalabstapler 20, von dem in Fig. 6 eine Prinzipdarstellung zusammen mit der Herstellvorrichtung 10 und in Fig. 7 ein bevorzugtes Ausführungsbeispiel gezeigt ist, hat ein Vertikalmagazin 28 zum Aufnehmen einer Mehrzahl der ersten Zellkomponenten 16 in einer vertikalen Anordnung und eine Auf- und Abbewegungseinrichtung 30 zum Auf- und Abbewegen der ersten Zellkomponenten 16 in dem Vertikalmagazin 28 und zum Abstapeln vereinzelter erster Zellkomponenten 16 in vertikaler Richtung. Bei einer bevorzugten Ausgestaltung weist die Auf- und Abbewegungseinrichtung 30 wenigstens ein Fördermittel 48 auf.

Die Anlieferungseinrichtung 26 ist an der Befüllstation 20 angeordnet und dient zum Anliefern vereinzelter erster Zellkomponenten 16 zu dem Vertikalabstapler 24 an der Befüllstation 20.

Der wenigstens eine Vertikalabstabler 24 ist dazu ausgebildet, an der Befüllstation 20 das Vertikalmagazin 28 durch einzelnes Aufnehmen der ersten Zellkomponenten 16 und Bewegen mittels der Auf- und Abbewegungseinrichtung 30 zu befüllen.

Der Vertikalabstapler 24 ist weiter dazu ausgebildet, zwischen der Befüllstation 20 und der Stapelstation 12 bewegt zu werden und an der Stapelstation 12 die ersten Zellkomponenten 16 einzeln durch Abwärtsbewegen in vertikaler Richtung abzugeben.

Wie aus den Fig. 2 und 4 bis 6 ersichtlich, hat die Herstellvorrichtung 10 wenigstens eine Stapelvorrichtung 32 zum Aufeinanderstapeln der ersten Zellkomponente 16 und der zweite Zellkomponente 18 abwechselnd aufeinander. Die Stapelvorrichtung 32 ist dazu ausgebildet, an der Stapelstation 12 in einer Stapelposition positioniert zu werden. Bei bevorzugten Ausgestaltungen der Herstellvorrichtung 10 sind mehrere Stapelvorrichtungen 32 zum Bilden eines Kreislaufs vorgesehen. In besonders bevorzugter Ausgestaltung hat die Herstellvorrichtung 10 eine Mehrzahl von Stapelvorrichtungen 32, die im Kreislauf zwischen der Stapelstation 20 und wenigstens einer weiteren Bearbeitungsstation zum Weiterbearbeiten des in der Stapelvorrichtung 32 gestapelten Brennstoffzellenschichtaufbaus bewegbar sind.

Weiter umfasst die Herstellvorrichtung 10 den wenigstens einen zwischen der Befüllstation 20 und der Stapelstation 12 bewegbaren Vertikalabstapler 24 zum Abstapeln vereinzelter erster Zellkomponenten 14 in vertikaler Richtung zu der Stapelvorrichtung 32. Vorzugsweise sind mehrere Vertikalabstapler 24 zum Bilden eines Kreislaufs vorgesehen. Eine bevorzugte Ausgestaltung der Herstellvorrichtung 10 hat eine Mehrzahl von Vertikalabstaplern 24, die im Kreislauf zwischen einer Aufnahmeeinheit 50 an der Stapelstation 12 und wenigstens einer Aufnahmeeinheiten 52 oder mehreren Aufnahmeeinheiten 52a-52d an der Befüllstation 20 bewegbar sind.

Weiter umfasst die Herstellvorrichtung 10 ein Seitenzuführsystem 34 zum seitlichen Zuführen vereinzelter zweiter Zellkomponenten 18 zu der Stapelvorrichtung 32.

Mit den bevorzugten Ausgestaltungen des Herstellverfahrens sowie der Herstellvorrichtung 10 werden beispielsweise Zellstapel von Brennstoffzellen hergestellt, die aus wechselweise aufeinandergestapelten ersten und zweiten Zellkomponenten 16, 18 gebildet sind. Beispiele für die ersten Zellkomponenten 16 sind Bipolarplatten, kurz BPP 17, und Beispiele für die zweiten Zellkomponenten 18 sind Membranelektrodenanordnungen, kurz MEA 19, siehe die Literaturstellen [1] bis [4] für weitere Einzelheiten.

Als bevorzugtes Ausführungsbeispiel für die Zellkomponentenabstapeleinrichtung 22 wird im Folgenden ein BPP-Zuführsystem 36 zum Zuführen von Bipolarplatten beschrieben. Dieses weist an der Befüllstation 20 als Beispiel für die Anlieferungseinrichtung 26 ein BPP-Zuführband 38 und den zwischen Befüllstation 20 und Stapelstation 12 bewegbaren wenigstens einen Vertikalabstapler 24, hier z.B. in Form eines Riemen-Abstaplers 40 für BPPs 17, auf.

Die Zellkomponentenabstapeleinrichtung 22 ist beispielsweise eine Vorrichtung zur Einbringung von BPP 17 in den Stackingprozess einer PEMFC.

Im Folgenden wird zunächst anhand der Darstellung in den Fig. 1 bis 6 ein Gesamtprozess zur Herstellung des Brennstoffzellenschichtaufbaus14 beschrieben, bevor unter Bezug auf die Fig. 7 bis 14 bevorzugte konkrete Ausgestaltungen der Zellkomponentenabstapeleinrichtung 22 und eines damit durchführbaren Zellkomponentenabstapelverfahrens erläutert werden.

Bei einer vorteilhaften Ausgestaltung des Gesamtprozesses gemäß den Fig. 1 bis 6 handelt es sich um ein Herstellverfahren zum Herstellen eines Brennstoffzellenschichtaufbaus in Form eines Polymer-Elektrolyt-Membran-Brennstoffzellen-Stacks, kurz PEMFC-Stack. Derartige Brennstoffzellenschichtaufbauten sowie dessen Komponenten sind beispielsweise aus den Literaturstellen [1] bis [4] bekannt, so dass für Einzelheiten darauf verwiesen werden kann. Das Herstellverfahren wird im Folgenden anhand der Darstellung in den Fig. 1 bis 6 erläutert.

Bei dem Herstellungsprozess des PEMFC-Stacks wird/werden zunächst die untere/unteren Randkomponente/Randkomponenten in die Stapelvorrichtung 32 eingelegt (S01). Bei der Stapelvorrichtung 32 handelt es sich um ein System, welches die abwechselnd eingebrachten Wiederholkomponenten BPP 17 und MEA 19 (Beispiele für erste und zweite Zellkomponenten 16, 18) aufnimmt, ausrichtet und für die weiteren Folgeprozesse ortsfest, innerhalb der vorgegebenen Positionstoleranzen führt.

Nachdem die Randkomponente/Randkomponenten positioniert und fixiert wurde/wurden (S02), erfolgt das Anlegen eines Führungssystems 42 (S03) und der Transport (S04) der Stapelvorrichtung 32 an die Stapelposition einer Stackingstation (Beispiel für Stapelstation 12). Die Randkomponente/Randkomponenten befinden sich in der Startposition (oberer Anschlag in der Stapelvorrichtung 32) - S05.

Während des Vorbereitungsprozesses der Stapelvorrichtung 32 wurde parallel ein gefüllter Vertikalabstapler 24 des BPP-Zuführsystems 36 direkt von der Bestückungsstation oder Befüllstation 20 oder von einer (nicht dargestellten) Pufferstation in die Stapelstation 12 (Stackingstation) transportiert (P01) und über der Stapelposition ausgerichtet und fixiert (N01).

In Analogie zur BPP 17 wurde das Vorhaltemagazin 68 eines Friktionsanlegers 66 (Feeder - Beispiel für Seitenzuführsystem 34) während des Vorbereitungsprozesses der Stapelvorrichtung 32 mit MEA-Komponenten (Beispiel für zweite Zellkomponente 18) gefüllt (P02, N02). Die Vorbereitung des Gesamtprozesses ist somit abgeschlossen, und der PEMFC-Stack kann aufgebaut werden (S06-S11 und Fig. 6).

Wie in Fig. 1 und Fig. 6 dargestellt dabei werden dabei abwechselnd MEA-Komponenten - zweite Zellkomponenten 18 - durch den Friktionsanleger 66 seitlich (S07) und BPP-Komponenten - erste Zellkomponenten 16 - durch den Vertikalabstapler24 des BPP-Zuführsystems 36 lotrecht von oben (S08) in die Stapelvorrichtung 32 eingebracht. Eine Ausrichtung, vor allem der MEA-Komponenten durch die seitliche Einbringung und die damit verbundene Änderung der Bewegungsrichtung von horizontal zu vertikal, erfolgt durch das Führungssystem 42 der Stapelvorrichtung 32 (S10). Durch die ausschließlich vertikale Ablagebewegung der BPP 17 ist im Vergleich zur MEA 19 nur ein sehr geringer Aufwand zur Ausrichtung/Positionierung erforderlich. Die Gesamttaktzeit für die Ablage einer Einzelzelle, bestehend aus BPP 17 und MEA 19 kann durch den Aufbau der einzelnen Systeme somit anteilig auf die jeweilige Komponente verteilt werden (N04). Je nach Bedarf ist es dadurch möglich, beispielsweise der Ablage der MEA anteilig mehr Taktzeit zuzuordnen, wenn dieser Prozess mehr Zeit erfordert.

Zudem kann der Ablageprozess, wenn erforderlich, optional durch Vibration im Ablagebereich unterstützt werden (P03), wodurch das Ausrichten der zuletzt abgelegten Komponenten vereinfacht wird. Hierzu ist - wie in Fig. 2 und 6 dargestellt - an dem Führungssystem 42 der Stapelvorrichtung 32 eine Vibrationseinrichtung 44 vorgesehen. Für nähere Einzelheiten zum Ausrichten von Zellkomponenten 16, 18 durch Vibration wird auf die Literaturstelle [7] verwiesen. Darin wurde die Verwendung von Vibration zur Ausrichtung von Komponenten, sowohl bei der Herstellung von Lithium-Ionen-Batteriezellen, als auch für die Herstellung von Brennstoffzellen-Stacks (PEMFC-Stacks) beschrieben. Ein mögliches Ausführungsbeispiel für die Stapelvorrichtung 32 selbst ist in der Literaturstelle [8] beschrieben und gezeigt.

Mit wachsendem Fortschritt des PEMFC-Stacks erfolgt durch die Stapelvorrichtung 32 ein Höhenausgleich um die Ablageposition der Wiederholkomponenten - erste und zweite Zellkomponenten 16, 18 - während des gesamten Stapelprozesses konstant zu halten (P04). Hierzu weist die Herstellvorrichtung 10 gemäß den Fig. 2 und 6 einen Hubaktor 70 mit auf und ab bewegbarer Schubstange 72 auf, mittels dem eine Grundplatte 74 der an der Stapelstation 12 positionierten Stapelvorrichtung 32 in vertikaler Richtung bewegbar ist. Der Hubaktor 70 ist beispielsweise ein Schrittmotor mit Gewindenuss, die mit einem Gewinde der als Gewindestange ausgebildeten Schubstange 72 in Eingriff ist.

Ein nachträgliches Ausrichten der Wiederholkomponenten 16, 18 (BPP 17 und MEA 19) nach dem Abschluss des Stapelprozesses (S10) ist infolge der wirkenden Gewichtskraft und der daraus resultierenden Haftung der einzelnen Lagen untereinander aufgrund der potenziellen Beschädigungsgefahr nicht vorgesehen.

In dem dargestellten Ausführungsbeispiel sind nach dem Abschluss des Stapelprozesses weitere Folgeprozesse (S11) für die Fertigstellung des PEMFC-Stacks vorgesehen. Diese Folgeprozesse werden an unterschiedlichen Positionen durchgeführt, wozu ein Abtransport (N05) der Stapelvorrichtung 32 aus der Stapelposition vorgesehen wird. Dieser Ab- bzw. Weitertransport der Stapelvorrichtung 32 erfolgt bis zum Abschluss des Herstellverfahrens und der Entnahme des PEMFC-Stacks. Die Stapelvorrichtung 32 wird dann anschließend zurück an den Prozessbeginn transportiert und neuerlich für die Erstellung eines weiteren PEMFC-Stacks vorbereitet. Die Stapelvorrichtung 32 befindet sich somit innerhalb eines geschlossenen Kreislaufsystems (S12) im Herstellverfahrens eines PEMFC-Stacks.

In Fig. 1 ist ein Flussdiagramm für ein Ausführungsbeispiel des oben beschriebenen Herstellverfahrens eines PEMFC-Stacks (Beispiel für einen Brennstoffzellenschichtaufbau) dargestellt. Die darin wiedergegebenen Beschriftungen bedeuten:
H Hauptvorgang (die Schritte des Hauptvorganges werden in Kästchen mit durchgehender Umrandung dargestellt);
N/P Nebenvorgang/Parallelprozess (parallel während des Hauptvorganges ablaufende Schritte eines Nebenvorgangs/Parallelprozesses werden in Kästchen mit gepunkteter Umrandung dargestellt);
   - S01: untere Randkomponente in die Stapelvorrichtung einlegen;
   - S02: untere Randkomponente in der Stapelvorrichtung fixieren;
   - S03: Führungssystem für die Wiederholkomponenten anlegen;
   - S04: Stapelvorrichtung an die Stapelposition transportieren;
   - S05: untere Randkomponente in Startposition;
   - S06: START STAPELVORGANG;
   - S07: seitliche Einbringung der MEA durch Feeder;
   - S08: lotrechte Einbringung der BPP durch BPP-Zuführsystem;
   - S09: Ausrichtung der MEA und BPP am Führungssystem;
   - S10: STOP STAPELVORGANG;
   - S11: FOLGEPROZESSE;
   - S12: Kreislauf der Stapelvorrichtungen;
   - P01: Parallelprozess: Einbringung des gefüllten Vertikalabstaplers des BPP-Zuführsystems in die Stapelstation;
   - P02: Parallelprozess: Einbringung der MEAs in ein Vorhaltemagazin des Feeders;
   - P03: Parallelprozess: gegebenenfalls Unterstützung des Ausrichtvorgangs durch Vibrations;
   - P04: Parallelprozess: Höhenausgleich der Stapelvorrichtung für konstante Ablageposition;
   - N01: Vertikalabstapler über der Stapelposition ausgerichtet, fixiert und für die Vereinzelung bereit;
   - N02: MEA-Vorhaltemagazin definiert gefüllt, MEAs positioniert und für die Vereinzelung bereit;
   - N03: Alternierende Einbringung von BPP und MEA bis zum Erreichen der geforderten Zellzahl;
   - N04: Taktzeitvariation zwischen MEA-Einbringung und BPP-Einbringung möglich;
   - N05: Abtransport der Stapelvorrichtung aus der Stapelstation, Weitertransport der Stapelvorrichtung zu den Folgeprozessen.

Die Herstellvorrichtung 10 weist eine in Fig. 3 und 6 angedeutete Steuerung 76 auf, die die Herstellvorrichtung 10, genauer deren Aktoren, Antriebe, Kupplungen, Transportsysteme usw., zum Durchführen des in Fig. 1 dargestellten Herstellverfahrens steuert. Die Steuerung 76 weist eine Steuereinheit 78 auf, die dabei die Zellkomponentenabstapeleinrichtung 22, genauer deren Aktoren, Antriebe, Kupplungen, Transportsysteme, usw., zum Durchführen des im Zuge des Herstellverfahrens durchzuführenden Zellkomponentenabstapelverfahrens (umfasst Befüllen des Vertikalabstaplers 24 und Abstapeln der ersten Zellkomponenten 16 an der Stapelstation 12) steuert. Die Steuerung 76 weist hierzu ein Computerprogramm mit den entsprechenden Steueranweisungen auf. Die Steuereinheit 78 kann ebenfalls durch Software implementiert sein.

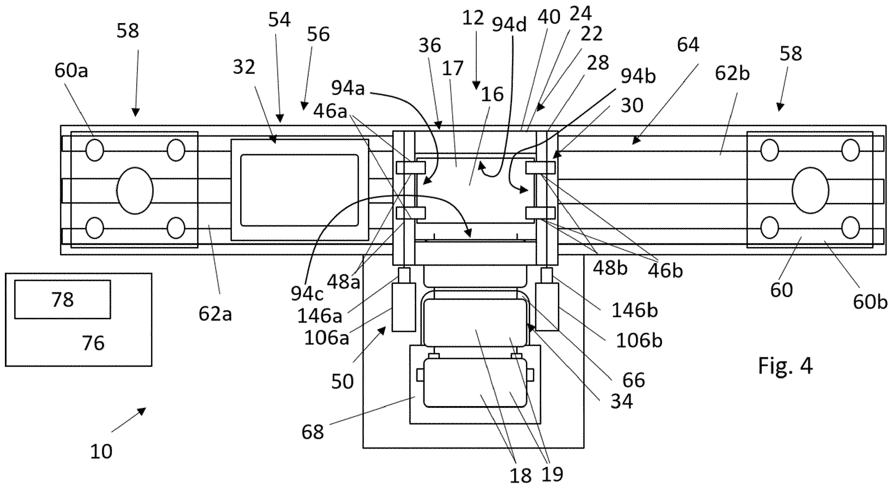

In den Fig. 2 bis 6 sind Ausführungsbeispiele für Vorrichtungen und Einrichtungen zur Durchführung des in Fig. 1 aufgeführten und oben schematisch erläuterten gesamten Herstellungsprozesses eines PEMFC-Stacks gezeigt, und diese werden nun mehr detailliert beschrieben. Fig. 2 zeigt eine Prinzipdarstellung der Gesamtanlage - Ausführungsbeispiel für Herstellvorrichtung 10. Insbesondere zeigt Fig. 2 eine Prinzipdarstellung der Gesamtanlage zur Herstellung eines PEMFC-Stacks (außer der Befüllstation 20). Fig. 3 zeigt eine Prinzipdarstellung eines Ausführungsbeispiels der Befüllstation 20. Insbesondere zeigt Fig. 3 eine Prinzipdarstellung einer BPP-Befüllstation zur Bestückung eines Vertikalabstaplers 24 des BPP-Zuführsystems 36. Fig. 4 zeigt eine Draufsicht auf eine Ausgestaltung der Gesamtanlage - Beispiel der Herstellvorrichtung 10 (außer der Befüllstation 20). Insbesondere zeigt Fig. 4 eine Draufsicht auf eine mögliche Kombi-Station zur Herstellung eines PEMFC-Stacks. Fig. 5 zeigt eine perspektivische Darstellung einiger Einheiten der Kombi-Station in einem mehr detaillierten Ausführungsbeispiel. Fig. 6 zeigt eine Prinzipdarstellung des Stapelprozesses. Insbesondere zeigt Fig. 6 die Verdeutlichung des Prinzips der BPP-Zuführung in die Stapelvorrichtung 32, insbesondere durch mitnehmerbestückte Zahnriemen 46 (Beispiel für Fördermittel 48) des BPP-Zuführsystems 36 (genauer des Riemen-Abstaplers 40).

Gemäß Fig. 2 bis 6 weist die hier dargestellte Ausführungsform der Herstellvorrichtung 10 wenigstens die in Fig. 3 dargestellte Befüllstation 20 und die in den Fig. 2 und 4 und 5 dargestellte Stapelstation 12 auf.

Gemäß der in Fig. 4 und 5 dargestellten Ausgestaltung kann die Herstellvorrichtung 10 eine Auflagestation 54 zum Auflegen von Randkomponenten des Zellschichtaufbaus an der Stapelvorrichtung 32 aufweisen. Gemäß der in den Fig. 4 und 5 dargestellten Ausgestaltung kann die Herstellvorrichtung 10 auch eine Entnahmestation 56 zum Entnehmen des Brennstoffzellenschichtaufbaus aus der Stapelvorrichtung 32 aufweisen. Die Auflagestation 54 und die Entnahmestation 56 sind bei der in Fig. 4 dargestellten Ausgestaltungen kombiniert als Auflage- und Entnahmestation 54, 56 vorgesehen, können aber auch einzeln vorgesehen sein. Gemäß der in Fig. 4 und 5 dargestellten Ausgestaltung kann die Herstellvorrichtung 10 wenigstens eine Pressstation 58 mit wenigstens einer Presse 60 zum Pressen des Brennstoffzellenschichtaufbaus 14 aufweisen. Bei der dargestellten Ausgestaltung sind eine erste und eine zweite Presse 60a, 60b vorgesehen, die mittels zugeordneter Transportsysteme 62a, 62b bewegbar sind. Die Pressstation 58 ist ein Beispiel für eine Station zur Durchführung eines Folgeprozesses. Auch das Auflegen einer oberen Randkomponente (oder von mehreren oberen Randkomponenten) auf den Stapel erster und zweiter Zellkomponenten 16, 18 an der Auflagestation ist ein Beispiel für einen Folgeprozess. Weitere möglichen Folgeprozesse ergeben sich für den Fachmann leicht aus den Literaturstellen [1] bis [4].

Wie in Fig. 5 und 6 gezeigt, kann die Herstellvorrichtung 10 weiter das Stapelvorrichtung-Transportsystem 64 zum Transportieren der Stapelvorrichtungen 32 zwischen der Auflagestation 54, der Stapelstation 56 und der Pressstation 58 aufweisen.

In den Fig. 2, 4 und 5 ist auch die Aufnahmeeinheit 50 der Stapelstation 12 zur positionierten Aufnahme des Vertikalabstaplers 24 in der passenden Position oberhalb der Stapelposition gezeigt. Die Aufnahmeeinheit 50 weist wenigstens einen oder mehrere Aktoren oder Antriebe (z.B. Schrittmotoren) 76 zum Antreiben der Auf- und Abbewegungseinrichtung 30 und eine Kupplung 78 zum Ankuppeln an ein Getriebe (hiernach noch näher erläutert) der Auf- und Abbewegungseinrichtung 30 des Vertikalabstaplers 24 auf.

Die in Fig. 3 dargestellte Befüllstation 20 weist die Anlieferungseinrichtung 26 auf, die ebenfalls wenigstens eine Aufnahmeeinheit 52, 52a-52d zur positionierten Aufnahme des Vertikalabstaplers 24 aufweist. Auch diese Aufnahmeeinheit 52, 52a-52d weist wenigstens einen oder mehrere Aktoren oder Antriebe (z.B. Schrittmotoren) 76 zum Antreiben der Auf- und Abbewegungseinrichtung 30 und eine Kupplung 78 zum Ankuppeln an ein Getriebe (hiernach noch näher erläutert) der Auf- und Abbewegungseinrichtung 30 des Vertikalabstaplers 24 auf.

Im Folgenden werden nun Ausführungsbeispiel der Zellkomponentenabstapeleinrichtung 22 anhand der Darstellung in den Fig. 6 bis 14 näher erläutert. Der Fokus der nachfolgenden Beschreibung vorteilhafter Ausgestaltungen der Zellkomponentenabstapeleinrichtung 22 richtet sich auf die Zuführung der BPP 17 in den Herstellungs- bzw. Stapelprozess eines PEMFC-Stacks (Beispiel für Zellschichtaufbau bzw. Brennstoffzellenschichtaufbau).

Die Zuführung der BPP 17 in den Stapelprozess bzw. in die Stapelvorrichtung 32 der automatisierten Stack-Assemblierung findet in der bisherigen derzeitigen Praxis meist durch die Entnahme aus magazinähnlichen Vorratsbehältern, oder dem Übersetzen der BPP 17 von einem Zuführfördermittel, insbesondere Zuführband, mittels Pick & Place Operation statt. Diese Pick & Place Operation der BPP 17 erfolgt bei internen bisherigen Lösungen zum Beispiel durch auf die Bauteile angepasste Greifersysteme, in Kombination mit Linearportalen oder Robotersystemen.

Aufgrund der kontinuierlich steigenden Nachfrage von Brennstoffzellen resultiert die Forderung nach einer Verringerung der Taktzeit des Stapelprozesses.

Weiter ist es wünschenswert, analog dazu den wachsenden Bedarf an Wiederholkomponenten zu decken sowie deren Zuführung in den Stapelprozess in entsprechender Geschwindigkeit zu realisieren.

Bei einer Zuführung der BPP 17 von den Vorratsmagazinen in die Stapelvorrichtung durch eine Pick & Place Operation (Roboter, Linearportal, etc.) gibt dieser Vorgang häufig das Taktzeitlimit des Stapelprozess vor.

Zudem sind bei der Verwendung von magazinähnlichen Vorratsbehältern in der Praxis of Zwischenlagen erforderlich, um die übereinander gestapelten BPP 17 von einer gegenseitigen Beschädigung zu schützen. Diese Zwischenlagen müssen durch einen Zusatzprozess von den BPP 17 getrennt, gesammelt und anschließend für eine Wiederverwendung oder Entsorgung vorbereitet werden.

Der Pick & Place Vorgang lässt sich zudem nicht beliebig beschleunigen, wodurch für eine Erhöhung der Ausbringung der Gesamtanlage eine Parallelisierung des BPP-Handlingssystems oder eine Parallelisierung der Gesamtanlage erforderlich ist.

Die minimale Taktzeit eines Pick & Place-Handlingsprozesses zur Ablage einer einzelnen BPP 17 wird zum gegenwärtigen Zeitpunkt bei ca. einer Sekunde gesehen.

Zudem ist bei einer Pick & Place Operation die Anzahl an BPP 17 je Transportvorgang limitiert und beschränkt sich meist auf den Transport von einer einzelnen Komponente.

Durch den Einsatz von Mehrfachgreifern besteht noch die Möglichkeit, eine gewisse Anzahl an BPP 17 je Transportzyklus aufzunehmen und zu transportieren. Durch den entsprechend aufwendigeren Aufnahmeprozess und der größeren Massenträgheit des Greifers kommt es aber zu einer Reduzierung der Prozessdynamik, wodurch die Anzahl an transportierten BPP 17 wiederum beschränkt wird.

Prozessbedingt sind somit durch den Pick & Place Vorgang während des Stapelprozesses große Transportwege zurück zu legen, wodurch zusätzlich zur Taktzeitlimitierung die Gefahr von Lageabweichungen und Komponentenbeschädigungen zunimmt.

### Ersetzen/Modifizieren des taktenden Pick & Place Vorgangs:

Vorteilhafte Ausgestaltungen der Zellkomponentenabstapeleinrichtung 22 sowie des damit durchführbaren Zellkomponentenabstapelverfahrens beruhen auf dem Gedanken, den bisherigen Pick & Place Vorgang für die Zuführung der BPP 17 zu ersetzen.

Das hier beschriebene System der BPP-Zuführung - BPP-Zuführsystem 36 - verringert die Transportwege der BPP 17 von der Anlieferungsposition der Materialzuführung, bis zur Ablage in die Stapelvorrichtung 32, wodurch sich drastische Verbesserungen hinsichtlich Taktzeitpotenzial, Ablagegenauigkeit und Prozesssicherheit ergeben.

### Anpassungsfähigkeit auf das Anlieferungssystem der BPP:

Bisher liegt kein einheitliches System für die Anlieferung der BPP 17 vom BPP-Fertigungsprozess zum Stapelprozess des PEMFC-Stacks vor. Meist werden die BPP 17 derzeit in Magazinen, mit Zwischenlagen getrennt voneinander, bereitgestellt.

Zukünftig, mit steigender Nachfrage an PEMFC-Stacks, wird jedoch ein System auf Grundlage einer direkten Verkettung für die Bewältigung der erforderlichen Einzelteile erwartet.

Als Übergangslösung wird dabei beispielsweise eine Entnahme der BPP 17 aus den BPP-Magazinen durch ein Roboter-/Greifersystem gesehen, die dann anschließend auf ein Befüllungsband 82 (oder dergleichen Fördermittel) der Anlieferungseinrichtung 26 des BPP-Zuführsystems 36 abgelegt werden.

Während des Weitertransports der aufgelegten BPP 17 in Richtung des Vertikalabstaplers 24 des BPP-Zuführsystems 36 erfolgt vorteilhaft eine erste grobe Ausrichtung durch ein seitlich angebrachtes mechanisches Führungssystem 80 für den anschließenden Hubvorgang.

Ausgestaltungen der Erfindung können somit auch als Zwischen-/Übergangslösung von der magazinierten Zuführung zur direkten Verkettung verwendet werden. Der Systemkern kann somit unangetastet bleiben.

Bevorzugte Ausgestaltungen der Erfindung haben bei Anwendung auf eine PEMFC-Produktion einen oder mehrere der folgenden Vorteile:
- Ersetzen der Pick & Place Operation bei der Zuführung der BPP 17 in den Stapelprozess
- Entwicklung eines BPP-Zuführsystems 36 mit hohem Taktzeitpotenzial
- Realisierung einer stufenlos einstellbaren Systemgeschwindigkeit um eine Skalierbarkeit hinsichtlich der Ausbringungsmenge umzusetzen
   o Umsetzung des Ramp-up mit gleichbleibendem BPP-Zuführsystem 36 ermöglichen
- Realisierung eines variablen Systems hinsichtlich BPP-Formatgröße, BPP-Material und der Zellzahl des zu fertigenden PEMFC-Stacks (min. aufzunehmende Anzahl an BPP 17)
- Verringerung der erforderlichen Anzahl an Handhabungsschritten, von der BPP-Fertigung bis zur Ablage der BPP 17 im PEMFC-Stack
   o Daraus resultiert eine Erhöhung der Ablagegenauigkeit
- Erhöhung des Bauteilschutzes beim Transport und bei der Ablage während der Stackbildung
   ∘ Erhöhung der Prozesssicherheit
   ∘ Vereinfachung der Stapelvorrichtung hinsichtlich Komponentenpositionierung
   ∘ Reduzierung der Ausschussmenge
   ∘ Reduzierung der Herstellungskosten eines PEMFC-Stacks
   ∘ Realisierung des Ramp-up für PEMFC-Fahrzeuge/Anwendungen
- Keine Notwendigkeit von Zwischenlagen zum Schutz der BPP 17 innerhalb des Zuführsystems
   ∘ Reduzierung von Materialkosten (Kunststofffolie)
   o Reduzierung von Müll (Umwelt/Entsorgungskosten)

Wenngleich Ausgestaltungen der Zellkomponentenabstapeleinrichtung 22 am Beispiel einer BPP 17 als zuzuführende Zellkomponente erläutert werden, sind die Prinzipien selbstverständlich auch auf andere platten- oder membranartige Zellkomponenten eines Zellschichtaufbaus (z.B. Batteriezellen, ...) anwendbar.

Bevorzugte Ausgestaltungen der Zellkomponentenabstapeleinrichtung 22 nutzen die Idee, die BPP 17 nicht wie bisher durch eine Pick & Place Operation einzeln, unter Verwendung eines Roboter-/Greifersystems, von einem BPP Vorratsmagazin zu entnehmen, über die Stackingstation zu transportieren und nach dem Abschluss von Ausrichtvorgängen zur Korrektur der Lagefehler auf dem PEMFC-Stack abzulegen, sondern alle BPP 17, die für den Aufbau eines PEMFC-Stacks notwendig sind, aufzunehmen, vorzupositionieren und über der Stapelvorrichtung 32 auf dem wachsenden PEMFC-Stack abzulegen.

Fig. 7 zeigt ein Ausführungsbeispiel für den Vertikalabstapler 24 der Zellkomponentenabstapeleinrichtung 22, am Beispiel eines BPP-Zuführsystems 36.

In Fig. 7 ist der Vertikalabstapler 24 mit dem Vertikalmagazin 28 zum Aufnehmen einer Mehrzahl der ersten Zellkomponenten 16 in einer vertikalen Anordnung und mit der Auf- und Abbewegungseinrichtung 30 zum Auf- und Abbewegen der ersten Zellkomponenten 16 in dem Vertikalmagazin 28 und zum Abstapeln vereinzelter erster Zellkomponenten 16 in vertikaler Richtung gezeigt.

Der Vertikalabstapler 24 hat eine selbsttragende Gehäuse- oder Rahmenkonstruktion 84. Die Gehäuse- oder Rahmenkonstruktion 84 weist bei dem dargestellten Ausführungsbeispiel eine Grundplatte 86 am unteren Ende, mehrere vertikale Rahmenholme, beispielsweise in Form eines ersten und zweiten Lagerschildes 88a, 88b, eine Abschlussplatte 90 am oberen Ende und mehrere Versteifungen 92, beispielsweise in Form von vorzugsweise lösbar angebrachter Querversteifungen 92a und fest angebrachter Diagonalversteifungen 92b auf.

Aufgrund der selbsttragenden Gehäuse- oder Rahmenkonstruktion 84 lässt sich der Vertikalabstapler manuell oder mittels geeigneter, nicht dargestellter Transportsysteme, z.B. Roboterarme, Portalsysteme oder dergleichen, zwischen den Aufnahmeeinheiten 52, 52a-52d der Befüllstation 20 und der wenigstens einen Aufnahmeeinheit 50 der Stapelstation leicht transportieren und positionieren.

Die Gehäuse- oder Rahmenkonstruktion 84 ist derart ausgebildet, dass das Vertikalmagazin 28 im Wesentlichen quaderförmig ausgebildet ist.

Die Auf- und Abbewegungseinrichtung 30 ist an einer ersten vertikal verlaufenden Seite 94a und an einer dieser gegenüberliegenden zweiten vertikal verlaufenden Seite 94b des Vertikalmagazins 28 angeordnet.

Die Auf- und Abbewegungseinrichtung 30 weist wenigstens ein an der ersten Seite 94a des Vertikalmagazins 28 in vertikaler Richtung bewegbares erstes Fördermittel 48a und wenigstens ein an der zweiten Seite 94b in vertikaler Richtung synchron bewegbares zweites Fördermittel 48b auf. Die Fördermittel 48a, 48b weisen jeweils eine Reihe von Erfassungselementen 96 als Mitnehmer zum Erfassen und Halten der ersten Zellkomponenten 16 auf. Hierzu sind die Fördermittel 48a, 48b als Zahnriemen 46 ausgebildet, an deren ins Innere des Vertikalmagazins 28 gerichteten Seite die Erfassungselemente 96 ausgebildet sind. Somit hat der Vertikalabstapler 24 wenigstens einen an der ersten Seite 94a in einer vertikalen Richtung bewegbaren ersten Zahnriemen 46a und wenigstens einen an der zweiten Seite 94b in einer vertikalen Richtung synchron bewegbaren zweiten Zahnriemen 46b. Bei der dargestellten Ausbildung sind zwei erste Zahnriemen 46a nebenaneinander an der ersten Seite 94a angeordnet, und auch sind zwei zweite Zahnriemen 46b nebeneinander an der zweiten Seite 94b angeordnet.

Zum Bewegen der Fördermittel 48a, 48b weist der Vertikalabstapler 24 ein Getriebe 98 auf, das jeweils eine Antriebswelle 100 und eine Umlenkwelle 102 pro Seite 94a, 94b umfasst. Bei der dargestellten Ausgestaltung ist die Antriebswelle 100 am unteren Ende und die Umlenkwelle 102 am oberen Ende an der Gehäuse- oder Rahmenkonstruktion 84 gelagert. Weiter ist eine erste Spanneinheit 101a mit einer ersten Spannwelle 103a an der ersten Seite 94a und eine zweite Spanneinheit 101b mit einer zweiten Spannwelle 103b an der zweiten Seite 94b vorgesehen, um die Fördermittel 48a, 48b zu spannen.

Bei einer nicht dargestellten Ausgestaltung hat der Vertikalabstapler 24 an der Antriebswelle 100 einen Aktor zum Antreiben der Auf- und Abbewegung. In diesem Fall sind an der jeweiligen Aufnahmeeinheit 50, 52a-52b Anschlüsse, zum Beispiel Kontakte, zum Ansteuern und zum Versorgen des Aktors vorgesehen.

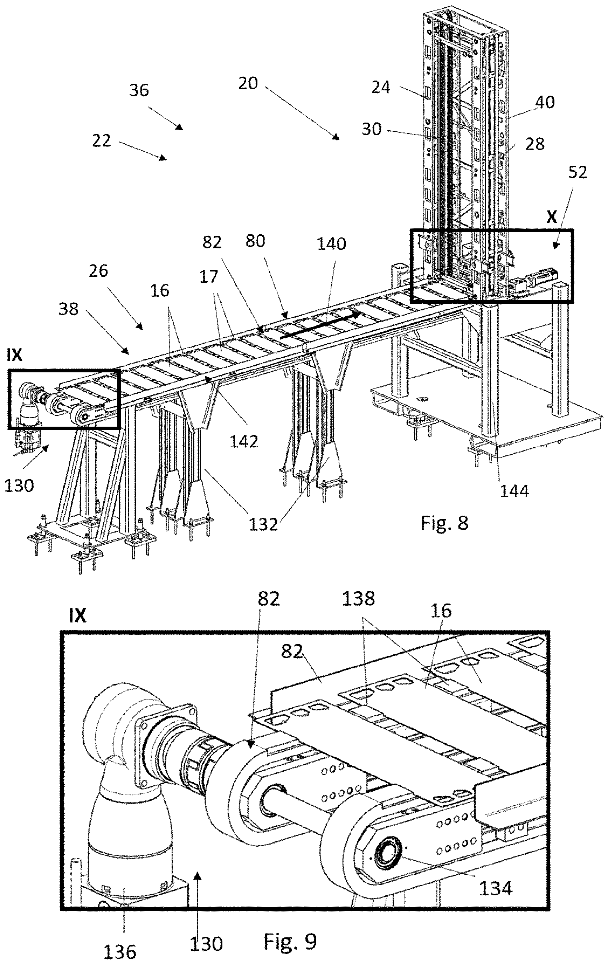

Bei der dargestellten bevorzugten Ausgestaltung hat der Vertikalabstapler an der Antriebswelle 100 eine(n Teil einer) Kupplung oder ein Ankoppelende 104 zum Ankoppeln eines an der Aufnahmeeinheit 50, 52a-52d vorgesehenen Aktors 106 (dargestellt in Fig. 8, 10 und 11) zum Antreiben der Auf- und Abbewegung.

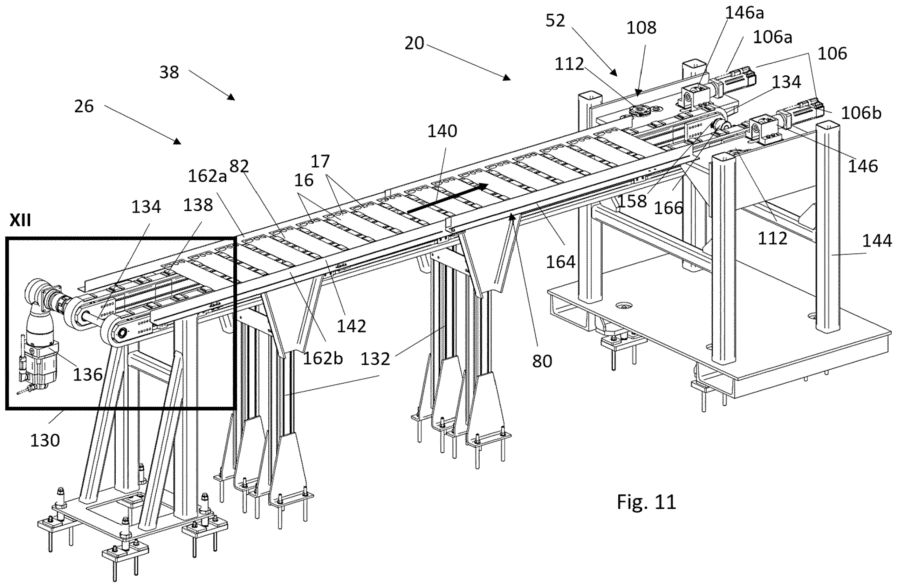

Weiter hat der Vertikalabstapler 24 eine Positioniereinrichtung 108 zum Positionieren des Vertikalmagazins 28 an der Befüllstation 20 und/oder an der Stapelstation 12. Bei dem dargestellten Ausführungsbeispiel hat die Positioniereinrichtung einen Passstift 110 zum Eingreifen in eine entsprechende Positionieröffnung 112 (dargestellt in Fig. 11) an der Aufnahmeeinheit 50, 52, 52a-52d.

Weiter hat der Vertikalabstapler 24 ein Bremssystem 114 zum Abbremsen zumindest der Abwärtsbewegung der Zellkomponenten in dem Vertikalmagazin. Bei der dargestellten Ausgestaltung ist an der Antriebswelle 100 eine Reibbremse 116 vorgesehen, die in ihre Bremsstellung vorgespannt ist und bei Anschluss an den Aktor 106 in ihre Freigabestellung gebracht wird.

Weiter hat der Vertikalabstapler 24 wenigstens eine Anlage- und/oder Führungseinrichtung 118 zum Positionieren und/oder Führen der Zellkomponenten beim Füllen und/oder Auf- und Abbewegen.

Bei einer bevorzugten Ausgestaltung hat der Vertikalabstapler 24 eine zumindest bereichsweise trichterförmige vertikale Führungseinrichtung 118 zum Positionieren der Zellkomponenten16 in Anlieferrichtung.

Bei der dargestellten Ausgestaltung weist die Anlage- und/oder Führungseinrichtung 118 an einer hinteren dritten Seite 94c des Vertikalmagazins 28 ein hinteres Führungssystem 120c mit zwei sich vertikal erstreckenden Führungsstangen 122c auf, gegen die eingeführte Zellkomponenten 16 anschlagen. Weiter sind an jeder der ersten und zweiten Seite 94a, 94b Führungsschienen 124 zur seitlichen Führung der Zellkomponenten 16 bei der Vertikalbewegung vorgesehen. Zur Führung von allen Seiten 94a-94d hat die Anlage- und Führungseinrichtung 118 an der vorderen vierten Seite 94d ein vorderes Führungssystem 120d mit vorderen Führungsstangen 122d.

Weiter hat der Vertikalabstapler 24 ein Verschlusssystem 126 zum lösbaren Fixieren zumindest eines Teils der Anlage- und/oder Führungseinrichtung 118. Bei dem dargestellten Ausführungsbeispiel sind die vorderen Führungsstangen 122d an Querstangen 128 befestigt, die mittels federvorgespannter und zum Lösen manuell zurückziehbarer Eingreifelemente 129 an den Lagerschildern 88a, 88b lösbar befestigt sind.

Dadurch ist an einer zu der ersten 94a und zweiten 94b quer verlaufenden dritten 94c und/oder vierten 94d vertikal verlaufenden Seite wenigstens eine Anlage- oder Führungseinrichtung 118 entfernbar angeordnet, gegen die die in dem Vertikalmagazin 28 aufgenommenen Zellkomponenten 16 anliegen. Der Abstand gegenüberliegender Führungsschienen 124 und Führungsstangen 122c, 122d kann von unten nach oben gerichtet am Anfangsbereich allmählich verkleinert sein, um so die trichterförmige Führungseinrichtung 118 zu bilden.

Im Folgenden werden Funktionen und Vorteile des Vertikalabstaplers 24, insbesondere bei Verwendung in der Zellkomponentenabstapeleinrichtung 22 und in der Herstellvorrichtung 10 näher erläutert. Außerdem wird im Folgenden eine Ausführungsform eines mit der Zellkomponentenabstapeleinrichtung 22 durchführbaren Zellkomponentenabstapelverfahren erläutert.

Bei dem Vertikalabstapler 24 des bevorzugten BPP-Zuführsystems 36 handelt es sich um ein aktives Magazinsystem, welches im Kern aus den an der selbsttragenden Gehäuse- oder Rahmenkonstruktion 84 gelagerten vertikal beweglichen Fördermitteln 48a, 48b mit den Erfassungselementen 96, wie z.B. vier modifizierten Zahnriemen 46, 46a, 46b, besteht. Dabei befinden sich auf der Rückseite des jeweiligen Zahnriemens 46, 46a, 46b aufgebrachte bzw. eingefräste Zusatzelemente, die sog. "Mitnehmer" oder Erfassungselemente 106, auf denen die BPP 17 gelagert werden.

Die Bestückung des BPP-Zuführsystems 36 erfolgt vorzugsweise durch ein Befüllungsband 82 an einer eigenständigen Bestückungsstation - hier z.B. die Befüllstation 20. Das Befüllungsband 82 ist an der Anlieferungseinrichtung 26 ausgebildet, die hiernach noch näher unter Bezug auf die Fig. 8 bis 14 beschrieben wird.

Die Positionierung des Vertikalabstaplers 24 des BPP-Zuführsystems 36 in der Befüllungsstation 20 und der Stapelstation 12 erfolgt vorzugsweise durch Nullpunktspannsysteme (Beispiel für Positioniereinrichtung 108 bzw. Aufnahmeeinheit 50, 52, 52a-52d für den Vertikalabstapler 24 an der jeweiligen Station 12, 20). Hierzu lässt sich der Passstift 110 der Positioniereinrichtung 108 unter genauer Definition des Nullpunkts der Zellkomponentenabstapeleinrichtung 22 mittels eines Spannsystems an der Positionieröffnung 112 einspannen.

Eine Kollision mit den auf dem Befüllungsband 82 liegenden BPP 17 beim Einbringen eines Vertikalabstaplers 24 in die Befüllungsstation 20 wird vorzugsweise durch eine definierte Lücke auf der Mitnehmerseite des Zahnriemens 46 verhindert.

Die BPP 17 wird vorzugsweise während des Bestückungsvorgangs in den Zwischenraum zwischen zwei aufeinanderfolgenden "Mitnehmer" 96 eingeschoben und durch eine Vertikalbewegung des Riemensystems (Beispiel für die Auf- und Abbewegungseinrichtung 30) abgehoben.

Vorzugsweise erfolgt gleichzeitig während dieser Hubbewegung eine Vorpositionierung der BPP 17 auf den "Mitnehmern" der Zahnriemen 46, 46a, 46b mittels des integrierten Führungssystems 118, 120, 122, 124.

Das integrierte Führungssystem 118, 120, 122, 124 ist vorzugsweise an die BPP-spezifischen Ausrichtelemente (Alignement-Bereiche) angepasst.

Die aufgenommenen BPP 17 werden durch die Zahnriemen 46, 46a, 46b und das Führungssystem 118, 120, 122, 124 während des Transports des vollständig gefüllten Vertikalabstaplers 24 von der Befüllungsstation 20 über die ggf. vorhandene "Pufferstation" (nicht dargestellt) bis hin zur Stapelstation 12 gegen Verrutschen gesichert.

Das integrierte Sperr- oder Bremssystem 114 verhindert das unkontrollierte Abstapeln der BPP 17 durch die Gewichtskraft.

Nach der Positionierung des Vertikalabstaplers 24 in der Stapelstation 12 über der Stapelvorrichtung 12 wird das Sperr- oder Bremssystem 114 gelöst und die Drehrichtung der Antriebe wird entgegen der Drehrichtung des Bestückungsvorgangs umgekehrt, wodurch die BPP 17 einzeln nacheinander zum korrekten Zeitpunkt in die Stapelvorrichtung 32 eingelegt werden.

Eine Erhöhung der Kapazität an speicherbaren BPP 17 kann durch eine einfache Verlängerung der Gehäuse- oder Rahmenkonstruktion 84, z.B. durch eine einfache Verlängerung der Lagerschilde 88a, 88b, unter Verwendung eines längeren Fördermitteles 48 (Zahnriemens 46) mit einer höheren Anzahl an Mitnehmern - Erfassungselementen 96 - spezifisch auf die jeweilige Anforderung für die Zellzahl eines PEMFC-Stacks angepasst werden.

Die bevorzugten Ausgestaltungen der Zellkomponentenabstapeleinrichtung 22 und des damit durchführbaren Zellkomponentenabstapelverfahrens unterscheiden sich grundlegend von den Vorrichtungen und Verfahren der Literaturstelle [6], bei denen es im Wesentlichen um die direkte Verarbeitung von bahnförmigen Zellstapelelementsubstraten zu PEMFC-Stacks geht (Vereinzelung und Ablegen/Stack-Bildung von bahnförmigen Zellstapelelementsubstraten in einem Prozessschritt).

Eine Kopplung der in der Literaturstelle [6] beschriebenen Materialzuführung der BPP als "Rollenware" in Kombination mit einer anschließenden Vereinzelungsstation zur Erzeugung getrennter BPP und dem unten beschriebenen System der BPP-Zuführung mittels Riemen-Abstapler ist jedoch möglich. Insbesondere ist somit eine Band-Verkettung des Befüllungsbandes 82 mit der Herstellung von BPPs möglich.

Ein Vorteil bevorzugter Ausgestaltungen der Zellkomponentenabstapeleinrichtung 22 liegt darin, dass im Gegensatz zu den bekannten Lösungen wie beispielsweise beim Pick & Place Vorgang die einzeln ausgeführten Prozessschritte, bestehend aus Komponentenentnahme, Komponententransport, Komponentenpositionierung und Komponentenablage nicht separat für jede einzelne BPP 17 umzusetzen sind.

Die Vorbereitung des BPP-Zuführsystems 36 mit der erforderlichen Gesamtmenge an BPP 17 für den Bau eines PEMFC-Stacks erfolgt nun in einer speziell dafür ausgelegten Befüllungsstation 20, wodurch Transportwege, Positionsabweichungen, Taktzeit und Beschädigungsgefahren drastisch reduziert und vom eigentlichen Stapelprozess separiert werden.

Gleichzeitig ermöglicht das BPP-Zuführsystem 36 durch seinen konstruktiven Aufbau, analog zur Bestückung, auch das Ablegen der BPP 17 mit reduzierten Ablagewegen, wodurch wiederum Ablagetoleranzen, Taktzeit und Beschädigungsgefahren reduziert werden.

Des Weiteren kann die Gesamtanlage durch die Verwendung mehrerer Vertikalabstapler 24, in Kombination mit einem entsprechend hinsichtlich Länge und Transportgeschwindigkeit angepassten Anlieferungseinrichtung 26, ohne Änderung des Gesamtanlagenkerns, erweitert bzw. parallelisiert werden wodurch ein parallel-sequenzieller Prozessablauf ermöglicht und ein kontinuierlicher BPP-Materialfluss erzielt wird.

Wie oben bereits erwähnt, kann eine Erhöhung der Kapazität an speicherbaren BPP 17 durch eine einfache Verlängerung der Lagerschilde 88a, 88b, unter Verwendung eines längeren Zahnriemens 46a, 46b mit einer höheren Anzahl an Mitnehmern - Erfassungselementen 96 - spezifisch auf die jeweilige Anforderung für die Zellzahl eines PEMFC-Stacks angepasst werden. Skalierungseffekte des PEMFC-Stacks im Bereich der Zellzahl können somit einfach umgesetzt werden.

Fig. 7 zeigt eine perspektivische Ansicht eines Ausführungsbeispiels für den Vertikalabstapler 24 im Ausgangszustand - vollständig geleert. Fig. 7 zeigt insbesondere den Aufbau des z.B. mit Riemen-Abstapler 40 ausgeführen BPP-Zuführsystems 36.

Der Vertikalabstapler 24 umfasst gemäß Fig. 7 zwei gegenüberliegende Zahnriemenpaare 46a, 46b, die auf mehreren Zahnriemenwellen - Antriebswelle 100, Umlenkwelle 102 - aufgelegt sind. Diese Zahnriemenwellen besitzen unterschiedliche Funktionen und liegen jeweils einmalig für jedes Zahnriemenpaar vor.

Bei der Antriebswelle 100 werden mehrere Funktionen für den Betrieb des BPP-Zuführsystems 36 umgesetzt. Dabei handelt es sich um den Antrieb des Zahnriemenpaars 46a, 46b durch jeweils einen angeflanschten Antrieb 106a, 106b, insbesondere Servoantrieb - Beispiel für Aktor 106 -, sowie um die Fixierung des Zahnriemenpaars 46a, 46b mittels des Bremssystems 117 nach dem Abschluss des Bestückungsvorgangs und vor dem anschließenden Transport zur Stapelstation 12, wodurch ein selbstständiges Ausbringen der BPP 17 aufgrund der Gewichtskraft verhindert wird. Die Synchronisierung beider Antriebe 106a, 106b und somit des gesamten Zahnriemensystems wird durch ein entsprechendes Regelungssystem - insbesondere ausgebildet als Teil der Steuereinheit 78 - durchgeführt.

Um das Zahnriemensystem zu vervollständigen und ein umlaufendes System zu ermöglichen, ist die Umlenkwelle 102 vorgesehen, welche in Kombination mit der Antriebswelle 100 auch die Kapazität an BPP 17 limitiert.

Um den Montageaufwand des Vertikalabstaplers 24 zu reduzieren und einen präzisen und sicheren Aufnahme- und Ablageprozess zu unterstützen, ist die Spannwelle 103a, 103b samt Spanneinheit 101a, 101b vorgesehen. Mit dieser Spanneinheit 101a, 101b werden die Zahnriemen 46a, 46b mit einer definierten Spannkraft beaufschlagt, wodurch die Systemtoleranz der in Kontakt mit den BPP 17stehenden Mitnehmern 96 reduziert wird und ein Ausweichen der Zahnriemen 46a, 46b, in Kombination mit den Führungsschienen 124 begrenzt wird.

Im Folgenden werden Vorteile und Funktionen der Lagerung des Zahnriemensystems und des Aufbaus der Gehäuse- oder Rahmenkonstruktion 84 erläutert.

Die oben beschriebenen Zahnriemenwellen - Antriebswelle 100 und Umlenkwelle 102 - befinden sich drehbar gelagert zwischen dem ersten und zweiten Lagerschild 88a, 88b, welche wiederum verschiebbar gelagert auf der Grundplatte 74 fixiert sind.

Um die Steifigkeit des Vertikalabstaplers 24 zu erhöhen und eine Verformung der Lagerschilde 88a, 88b aufgrund der Gewichtskraft der BPP 17und der Spannkraft der Zahnriemen 46a, 46b zu verhindern, befindet sich auf der Oberseite der Lagerschilde 88a, 88b die Abschlussplatte 90, welche eine Verbindung aller Lagerschilde 88a, 88b herstellt und für einen konstant bleibenden Abstand der Zahnriemenpaare 46a, 46b sorgt.

Zudem befinden sich zwischen den Lagerschilden 88a, 88b die Versteifungen 92, die die Lagerschilde 88a, 88b zueinander auf einen definierten Abstand halten, aussteifen und ein Ausbauchen der Lagerschilde 88a, 88b, sowohl bei der Be- und Entladung, als auch beim Transport, verhindern.

Je nach Bedarf können die Streben der Versteifungen 92 gelöst und ohne Demontage der Lagerschilde 88a, 88b entnommen werden, um das BPP-Zuführsystem auf die jeweiligen Anforderungen anpassen zu können.

Diese Versteifungen 92 sind vorteilhaft, um eine einseitig offene Gestaltung des Vertikalabstaplers 24 und die damit einhergehenden Einbußen hinsichtlich der mechanischen Steifigkeit zu kompensieren.

Dieses einseitig offene Design des Vertikalabstaplers 24 ermöglicht es, die Bestückung des Vertikalabstaplers 24, beispielsweise in parallel-sequenzieller Abfolge, zu vereinfachen und die weiter unten noch näher beschriebenen verschiedenen Szenarien einer N.i.O-Strategie zu realisieren.

Im Folgenden wird der Aufbau bevorzugter Ausgestaltungen der Anlieferungseinrichtung 26 anhand der Darstellung der Fig. 8 bis 14 näher erläutert.

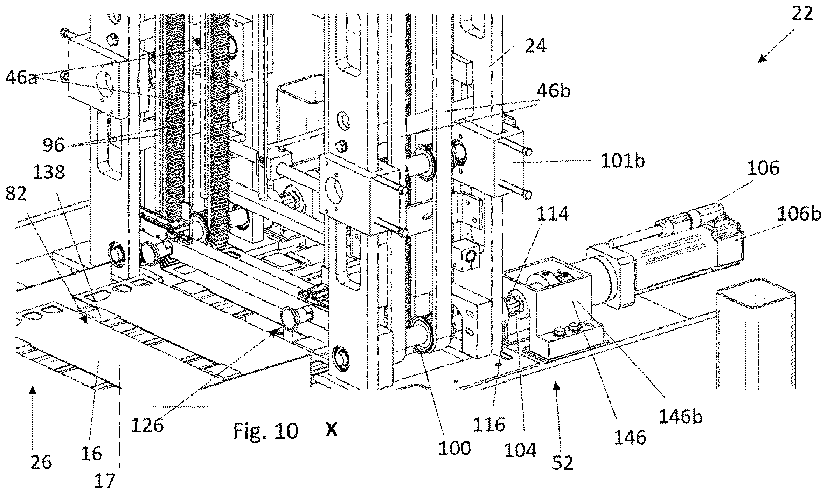

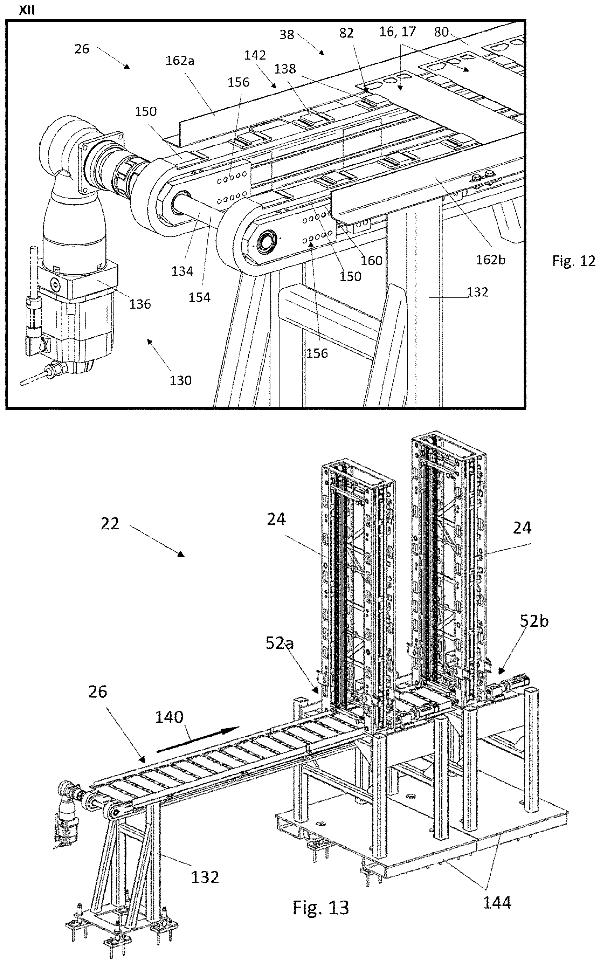

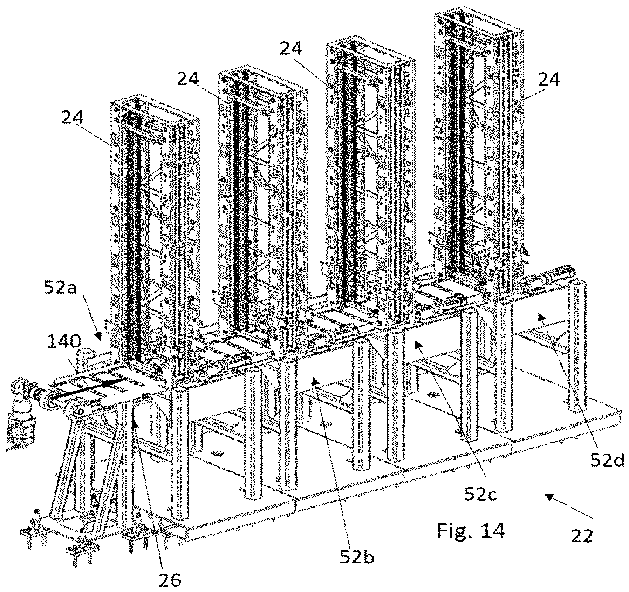

Die Fig. 8 zeigt ein Ausführungsbeispiel der Zellkomponentenabstapeleinrichtung 22, die den Vertikalabstapler 24 in Kombination mit der Anlieferungseinrichtung 26 an der Befüllstation 20 aufweist. Fig. 9 zeigt das Detail IX von Fig. 8. Fig. 10 zeigt das Detail X von Fig. 8. Fig. 11 zeigt die Anlieferungseinrichtung 26 ohne Vertikalabstapler 24. Fig. 12 zeigt das Detail XII von Fig. 11. Und die Figuren 13 und 14 zeigen Modifikationen der Zellkomponentenabstapeleinrichtung 22 mit mehreren Aufnahmeeinheiten 52a-52d an der Anlieferungseinrichtung 26, um mehrere Vertikalabstapler 24 aufzunehmen und zu befüllen.

Bei den in den Fig. 8 bis 12 dargestellten Ausführungen weist die Anlieferungseinrichtung 26 die Aufnahmeeinheit 52 zum positionierten Aufnehmen des Vertikalabstaplers 24 auf. Bei den Modifikationen der Fig. 13 und 14 weist die Anlieferungseinrichtung 26 noch eine oder mehrere weitere Aufnahmeeinheiten 52a-52d zum positionierten Aufnehmen je eines weiteren Vertikalabstaplers 24 auf.

Gemäß den Fig. 8 bis 12 weist die Anlieferungseinrichtung 26 ein beispielsweise als Zuführkette oder Zuführband ausgebildetes formschlüssiges Zuführfördermittel zum seitlichen Anliefern der ersten Zellkomponenten 16 zu dem wenigstens einen Vertikalabstapler 24 auf. Bei der dargestellten Ausführung weist die Anlieferungseinrichtung als Zuführfördermittel ein Befüllungsband 82 auf.

Weiter weist die Anlieferungseinrichtung 26 ein Antriebssystem 130 für die Anlieferbewegung auf.

Bei der konkreten Ausgestaltung ist zum Bilden der Anlieferungseinrichtung 26 an der Befüllstation ein Maschinengestell 132 vorgesehen, das an seinen beiden Längsenden je eine Befüllungsbandwellen 134 trägt, um das vorzugsweise als Zahnriemenpaar ausgebildete Befüllungsband 82 zu lagern. Eine der Befüllungsbandwellen 134 dient als Antriebswelle und wird durch einen Aktor 136, insbesondere einen Servomotor, des Antriebssystems 130 angetrieben. Auf der Außenseite ist das Befüllungsband 82 mit an die Kontur der ersten Zellkomponenten 16 angepassten formschlüssigen Erfassungselementen 138 versehen, um die ersten Zellkomponenten 16 formschlüssig zu erfassen und bei Bewegung des Befüllungsbands 82, gesteuert über die Steuereinheit 78 und das Antriebssystem 130 positioniert in Anlieferrichtung 140 anzuliefern. Somit ist eine Reihe formschlüssiger Erfassungselemente 138 vorgesehen, die zum formschlüssigen Erfassen der ersten Zellkomponenten 16 ausgebildet und zum Anliefern der ersten Zellkomponenten 16 hin zu dem Vertikalabstapler 24 bewegbar sind.

Weiter weist die Anlieferungseinrichtung 26 ein zumindest bereichsweise trichterförmiges Führungssystem 142 zum Positionieren der ersten Zellkomponenten 16 in Richtung quer zur Anlieferrichtung 140 beim Anliefern auf. Dadurch lassen sich die ersten Zellkomponenten 16 bereits beim Anliefern vorpositionieren.

Im Folgenden wird die Funktion des BPP-Zuführbands anhand der Darstellung in den Fig. 11 und 12 erläutert. In den Fig. 11 und 12 ist das BPP-Zuführband 38 für die Bestückung des Vertikalabstaplers 24 samt Detailansichten dargestellt. Insbesondere zeigt Fig. 11 die perspektivische Gesamtansicht des BPP-Zuführbands 38 und Fig. 12 zeigt die Detailansicht XII des BPP-Zuführbands 38.

Das BPP-Zuführband 38 umfasst ein Zahnriemensystem, welches sich aus zwei modifizierten Zahnriemen 150 (Beispiel für Befüllungsband 82) mit einer umlaufenden Negativkontur für die Vorpositionierung der BPP 17, dem Antriebssystem 130 samt Antriebswelle 154, Spannsystem 156 und Positionsgebern 166, einer Umlenkwelle 158 und einem Gleitführungssystem 160 für die Abstützung der beladenen Zahnriemen 150/des beladenen BPP-Befüllungsbands 82 zusammensetzt.

Die Negativkontur auf den Zahnriemen 150, für die Vorpositionierung der BPP 17, wird vorrangig durch Einfräsen in das Zahnriemenmaterial, oder Aufschrauben von Positionierelementen - Beispiele für die Erfassungselemente 138 des Befüllungsbands 82 - erzeugt und ist speziell auf die zu verarbeitenden BPP 17 bzw. deren definierte Kontaktbereiche angepasst.

Zudem sind für die Positionierung der BPP 17 quer zur Transportrichtung ebenfalls Führungsleisten 162a, 162b angebracht um die korrekte Position für das Einbringen der BPP 17 zwischen die Mitnehmer 96 des Vertikalabstaplers 24 innerhalb der Toleranzen zu erreichen.

Diese Führungsleisten 162a, 162b laufen im vorderen Bereich trichterförmig in Richtung der Übergabeposition zu und bilden so das trichterförmige Führungssystem 142 und gehen dann in einen parallelen Führungsbereich zum Bilden eines parallelen Führungssystems 164 über. Diese Führungsleisten 162a, 162b können, je nach Bauteilgeometrie und Positionieranforderungen, entsprechend justiert werden.

Die Aufnahmeeinheiten 52, 52a-52d der in den Fig. 8 bis 14 dargestellten Ausführungsformen der Anlieferungseinrichtung 26 weisen je wenigstens einen Aktor 106 zum Antreiben der Auf- und Abbewegung der ersten Zellkomponenten 16 in dem Vertikalmagazin 28 und wenigstens eine schaltbare Kupplung 146, 146a, 146b zum Koppeln des wenigstens einen Aktors 106 mit der Auf- und Abbewegungseinrichtung 30 des wenigstens einen Vertikalabstaplers 24 auf.

Zum Bilden der Aufnahmeeinheit(en) 52, 52a-52d ist jeweils ein gesondertes Gestell 144 vorgesehen, das mittels hier nicht näher dargestellter Positionierungseinheiten fest positioniert relativ zu dem Maschinengestell 132 angeordnet werden kann, und an dessen Oberseite das Nullpunktspannsystem mit der Positionieröffnung 112 zur positionierten Aufnahme des zugeordneten Vertikalabstaplers 24 und der erste und der zweite Antrieb 106a, 106b als Aktor 106 angeordnet sind. Jeder Antrieb 106a, 106b ist mit einer schaltbaren Kupplung 146a, 146b an das Ankoppelende der jeweiligen Antriebswelle 100 an der ersten und der zweiten Seite 94a, 94b des Vertikalabstaplers 24 ankoppelbar. Diese ist derart ausgebildet, dass beim Ankoppeln auch das Bremssystem 114 der Antriebswelle 100 in ihre Freigabestellung gedrängt wird.

Durch das Positionieren mehrerer solcher Gestelle 144 nebeneinander ist die Anlieferungseinrichtung gemäß den Fig. 13 und 14 dazu ausgebildet, einen ersten Vertikalabstapler 24 an einer ersten Aufnahmeeinheit 52a und einen zweiten Vertikalabstapler 24 an einer zweiten Aufnahmeeinheit 52b aufzunehmen und nacheinander zu befüllen. Somit ist die Anlieferungseinrichtung 26 dazu ausgebildet ist, mehrere Vertikalabstapler 24 an in Anlieferrichtung 140 nacheinander angeordneten Aufnahmeeinheiten 52a-52b parallel zu befüllen.

Bei den dargestellten Ausführungsbeispielen der Anlieferungseinrichtung 26 ist eine Befüllung des jeweiligen Vertikalabstaplers 24 von unten vorgesehen. Eine Anlieferung der ersten Zellkomponenten erfolgt durch eine seitliche Anlieferung 140. Bei anderen, nicht näher dargestellten Ausgestaltungen ist die Anlieferungseinrichtung 26 dazu ausgebildet, den wenigstens einen Vertikalabstapler von oben zu befüllen.

Im Folgenden werden die Funktion der Anlieferungseinrichtung 26 und das Befüllen der Vertikalabstapler 24 anhand der Darstellung in den Fig. 8 bis 12 näher erläutert.

Ausgangssituation für die Bestückung des Riemen-Abstaplers 30 oder allgemeiner des Vertikalabstapler 24 ist, dass die als BPP 17ausgebildeten ersten Zellkomponenten 16 auf dem an deren Kontur angepassten Zuführfördermittel - Befüllungsband 82 - in die Befüllungsstation 20 eingebracht werden.

In zukünftigen Anwendungen, mit steigender Nachfrage an PEMFC-Stacks, erfolgt ein starker Anstieg an zu verarbeitenden Wiederholkomponenten (BPP 17 und MEA 19).

Aufgrund dessen wird eine direkte Verkettung zwischen BPP-Fertigung und Stacking als sehr vorteilhaft, im Hinblick auf den logistischen Aufwand der Materialzuführung, angesehen. Hier ergibt sich auch eine Möglichkeit einer Kombination mit der Zuführung von Rollenware gemäß Literaturstelle [6].

Als direkte Verkettung ist dabei die unmittelbare Ablage der geprüften i.O.-BPP 17 (i.O. = in Ordnung, N.i.O = nicht in Ordnung), ohne Zwischenschritt, in die Negativkontur des Zuführfördermittels - Befüllungsband 82 - zu verstehen. Es erfolgt eine Vorpositionierung der BPP 17 auf dem durch modifizierte Zahnriemen ausgebildeten Befüllungsband 82.

Die auf dem BPP-Zuführband 38 vorausgerichteten BPP 17 werden in Richtung des Vertikalabstaplers 24 transportiert. Dieser Transportvorgang kann sowohl taktend als auch kontinuierlich ablaufen.

Der taktende Betrieb des BPP-Zuführbands 38 beinhaltet die Vorteile einer einfacheren und präziseren Positionierung für den nachfolgenden Hubvorgang sowie einer Vermeidung von Relativbewegungen zwischen BPP 17 und den Erfassungselementen 96 der Zahnriemen 46a, 46b des Vertikalabstaplers 24. Dadurch kann die Prozesssicherheit erhöht und die Beschädigungsgefahr der BPP 17 reduziert werden. Einzig die permanenten Beschleunigungs- und Verzögerungsvorgänge sorgen für eine höhere Belastung des BPP-Zuführbands 38.

Eine kontinuierliche Materialzuführung/ein kontinuierlicher Materialfluss der BPP 17 von der BPP-Fertigung auf das BPP-Zuführband 38 ist bei beiden Prozesscharakteristiken realisierbar.

Die Ausrichtung der BPP 17, senkrecht zur Transportrichtung ist durch das trichterförmige Führungssystem 142 des BPP-Zuführbands 38 bereits erfolgt. Diese Position wird durch die bspw. vier Zahnriemen 46a, 46b der gegenüberliegenden Zahnriemenpaare des Vertikalabstaplers 24 während des Aufnahmeprozesses beibehalten und kann, aufgrund der mechanischen Begrenzung während des gesamten Bestückungsprozesses, nur im Rahmen der Nachgiebigkeiten der Zahnriemen 46a, 46b verändert werden.

Die Ausrichtung der BPP 17 in Transportrichtung - Anlieferrichtung 140 - erfolgt zum einen durch das geregelte Antriebssystem 130 des BPP-Zuführbands 38 (grobe Vorpositionierung) und durch das weitere Führungssystem 120 innerhalb des Vertikalabstaplers 24.

Dieses Führungssystem 120 des Vertikalabstaplers 24 weist in bevorzugter Ausgestaltung wiederum eine Trichterform in vertikaler Richtung auf, wodurch die BPP 17 beim Transport nach oben (Hubbewegung) entsprechend den Positionsvorgaben mechanisch an den dafür vorgesehenen Bereichen (Alignments) ausgerichtet werden.

Sowohl die Hubbewegung bei der Befüllung des Vertikalabstaplers 24, als auch die spätere Senkbewegung während des Abstapelns erfolgt durch Antriebe 106a, 106b, welche mittels der schaltbaren Kupplungen 146, 146a, 146b an den Vertikalabstapler 24 angekoppelt werden. Bei bevorzugten Ausgestaltungen ist eine Ausrichtung der Komponente an der in Transportrichtung vorderen Seite vorgesehen.

Im Folgenden werden die Funktionen des Verschlusssystems 126, das Ausbilden eines umlaufenden Führungssystems, eine Pufferung und eine vorteilhafte N.i.O-Strategie anhand der Darstellung in den Fig. 7 bis 12 näher erläutert.

Um die BPP 17 umlaufend (an der ersten bis vierten Seite 94a-94d) zu führen, ist das Verschlusssystem 126 auf der Vorderseite (vierte Seite 94d) vorgesehen, welches die BPP-Führung auf der Innenseite (in Transportrichtung hinteren Seite) des Vertikalabstaplers 24 generiert.

Dieses Verschlusssystem 126 ist sowohl während des Bestückungsprozesses, als auch während des Transports des vollständig bestückten Vertikalabstaplers 24 zu dem jeweiligen Pufferplatz (nicht dargestellt, an der Pufferstation) und anschließend zu der Stapelstation 12 geschlossen.

Ein Öffnen des Verschlusssystems 126 erfolgt vorzugsweise ausschließlich beim Eintritt eines N.i.O-Falls, für die Umsetzung der N.i.O-Strategie.

Wie im Folgenden noch näher erläutert wird bedeutet konzeptbedingt ein N.i.O-Fall eine nicht gefüllte Mitnehmerebene im Vertikalabstapler 24, da fehlerhafte BPP 17 beim Bestückungsprozess umgehend ausgeschleust werden. Die Position der leeren Mitnehmerebene wird erfasst und gespeichert.

Die N.i.O-Strategie sieht vorzugsweise vor, dass mittels Hubsystem eine vorbereitete i.O-BPP 17 auf die leere N.i.O-Mitnehmerebene angehoben und eingeschoben wird, wodurch die vorhandene BPP-Lücke geschlossen wird.

Grundsätzlich wird eine sehr geringe Anzahl an N.i.O-BPP innerhalb des Verarbeitungsprozesses (Stacking) angestrebt, daher ist generell eine 100%ige i.O-Eingangsprüfung der Wiederholkomponenten durchzuführen. Dies erfolgt bereits auf Seiten der BPP-Herstellung vor der Ablage auf der Anlieferungseinrichtung 26.

Die Wahrscheinlichkeit einer N.i.O-BPP welche trotz einer 100%-i.O-Prüfung in den Stackingprozess gelangen, steigt entsprechend der umgesetzten Ausbringungsmenge.

Bei einer Versuchs- bzw. Kleinserienanlage (N.i.O-Strategie Version 1.0) ist ein automatisiertes Entfernen des Verschlusssystems 126 nicht zwingend erforderlich. Somit kann das Verschlusssystem 126 bei kleineren Serien manuell geöffnet werden und der leere Platz befüllt werden.

Die hier beschriebenen Vorrichtungen und Verfahren sollen insbesondere zur Großserienherstellung ausgebildet werden, so dass eine sehr große Menge an Zellkomponenten 16, 18 zu verarbeiten sind.

Bei steigender Ausbringungsmenge und steigendem Automatisierungsgrad der Gesamtanlage ist ein automatisiertes Entfernen des Verschlusssystems wünschenswert.

Ein automatisiertes Entfernen des Verschlusssystems 126 wird bei Ausgestaltungen der Herstellvorrichtung 10 folgendermaßen umgesetzt.

Bei einer Ausgestaltung ist, beispielsweise an der (nicht dargestellten) Pufferstation, eine Einrichtung zum automatischen Füllen eines leeren Platzes in dem Vertikalabstapler 24 vorgesehen. Eine Ausgestaltung der Einrichtung zum automatischen Füllen setzt ein automatisches Öffnen des Verschlusssystems 126 nach dem Prinzip Schaltwalze bei Klauengetrieben um.

Eine Mechanik mit definierter Kontur ("Schaltwalze") greift in ein oder mehrere Betätigungselemente ("Schaltgabeln") ein und generiert durch eine Translations- und/oder Rotationsbewegung die Öffnungsbewegung des Verschlusssystems 126. Die Schaltwalze befindet sich als stationäres Element innerhalb der Pufferstation. Dadurch kann die Positionierung von dem Betätigungsmechanismus ("Schaltwalze") zu den Betätigungselementen ("Schaltgabeln") des Verikalabstaplers 24 bereits durch das Aufsetzen und Fixieren durch die Nullpunktspannsysteme realisiert werden. Die Kopplung von Betätigungsmechanismus ("Schaltwalze") und Betätigungselement ("Schaltgabel") erfolgt entweder bereits durch das Aufsetzen des Vertikalabstaplers auf der Pufferstation oder wird durch einen separaten Kopplungsvorgang umgesetzt.

Der separate Kopplungsvorgang stellt eine aktive Bewegung des Betätigungsmechanismus ("Schaltwalze") zum Betätigungselement ("Schaltgabel") dar.

Zum Befüllen des leeren Platzes arbeitet eine Ausgestaltung der Einrichtung zum Befüllen nach dem Prinzip Pneumatikzylinder.

Beispielsweise sind an der Pufferstation stationäre Pneumatikzylinder vorgesehen, welche im N.i.O-Fall an das Führungssystem angedockt werden und dann in der horizontalen Ebene zunächst die Alignments von den BPP abheben und dann zur Seite bewegen.

Zur Umsetzung der N.i.O.-Strategie erfolgt eine Eingangsprüfung an der Anlieferungseinrichtung 26. Zum Beispiel können optische Systeme zur Prüfung der BPP 17 auf dem BPP-Zuführband 38 vorgesehen sein. Die N.i.O-BPP wird bereits auf dem BPP-Zuführband 38 detektiert und entfernt.

Dieser Vorgang kann beispielsweise durch Ausblasen mittels Druckluftimpuls oder Auswerfen durch einen mechanischen Auswurfmechanismus erfolgen.

Die ausgeschleusten N.i.O-BPP werden in entsprechenden N.i.O-BPP-Behältern aufgefangen, gesammelt und aus der Anlage entfernt (Schadensanalyse, Recycling, etc.).

Dadurch entsteht eine Leerstelle auf dem BPP-Zuführband 38 und somit auch eine Leerstelle innerhalb des Riemen-Abstaplers 40, die dann durch den Hubmechanismus (N.i.O-Strategie Version 1.0), z.B. an der Pufferstation, gefüllt wird.

Eine alternative N.i.O-Strategie liegt ebenfalls vor und wird im Nachfolgenden als Version 2.0 beschrieben.

Bei der alternativen N.i.O.-Strategie 2.0 erfolgt eine Leerstellenvermeidung durch angepasstes Management der BPP-Bandzuführung.

Ein Vorteil dieser Konstellation aus einer BPP-Bandzuführung in Kombination mit dem Riemen-Abstapler 40 ist es, eine N.i.O-Strategie durch die beiden Systeme selbst realisieren zu können. Ein separater Hubmechanismus ist nicht erforderlich.

Dabei werden Leerstellen in den Riemen-Abstaplern 40 durch ein entsprechendes Management der BPP-Bandzuführung direkt vermieden. Das bedeutet, dass bei einem detektierten N.i.O-Fall die entstandene Leerstelle (Auswurf der N.i.O-BPP) auf dem BPP-Zuführband 38 durch dessen Weitertaktung ausgeglichen wird. Die Auf- und Abbewegungseinrichtung 30 des Riemen-Abstaplers 40 wird in dieser Zeit nicht bewegt (keine Hubbewegung). Eine Leerstelle kann somit direkt in der BPP-Befüllstation 20 vermieden werden.

Bei einer parallel-sequenziellen Befüllung der Vertikalabstapler 24 mit mehreren Aufnahmeeinheiten 52a-52d an der Anlieferungseinrichtung ist der Aufwand im Hinblick auf das Management des BPP-Zuführbandes in Kombination mit den Hubbewegungen der einzelnen Vertikalabstapler etwas aufwendiger, kann jedoch ebenfalls umgesetzt werden.

Diese Variante 2.0 der N.i.O-Strategie wird, besonders vor dem Hintergrund steigender Ausbrindungsmengen bevorzugt, da der Hubmechanismus samt Übergabeprozess am Pufferplatz eingespart werden kann.

Die oben beschriebene N.i.O-Strategie der Version 1.0 eignet sich vorrangig bei geringerer Ausbringungsmenge.

Durch diesen Ansatz ist eine Korrektur der N.i.O-Leerstellen innerhalb der Riemen-Abstapler 40 auch manuell durch einen Werker realisierbar.

Die beschriebene N.i.O-Strategie der Version 2.0 eignet sich für größere Ausbringungsmengen und dem Einsatz innerhalb der Großserienfertigung von PEMFC-Stacks (steigender Automatisierungsgrad). Mit dem Einsatz dieser N.i.O-Strategie 2.0 geht ein wachsender Aufwand hinsichtlich dem Management des BPP-Zuführsystems/BPP-Zuführbands (Software der Steuereinheit 78) bei gleichzeitiger Reduzierung der mechanischen Anlagenkonstellation (Entfallen der Hubeinheit) einher.

Im Folgenden wird anhand der Darstellung der Fig. 13 und 14 eine mögliche Umsetzung einer sequenziellen oder parallel-sequenziellen Befüllung der Vertikalabstapler 24 erläutert.

Um eine kontinuierliche Materialzuführung/ einen kontinuierlichen Materialfluss der BPP 17 zu ermöglichen, ist es vorteilhaft, dass innerhalb der Befüllstation 20 (Bestückungsstation) zum Ende des Bestückungsprozesses eines Vertikalabstaplers 24 immer ein leerer, zur Bestückung bereiter Vertikalabstapler 24 bereitsteht.

In Fig. 13 ist eine Ausgestaltung der kleinsten Einheit der bevorzugten Befüllstation für sequenzielle Befüllung der Vertikalabstapler 24 vorgesehen, die mindestens zwei Bestückungspositionen für Vertikalabstapler 24 aufweist. Hierzu sind an der Anlieferungseinrichtung 26 die erste und die zweite Aufnahmeeinheit 52a, 52b in Anlieferungsrichtung 140 hintereinander vorgesehen.

Dieser Aufbau ist schematisch mit zwei leeren Vertikalabstapler in Fig. 13 dargestellt. Insbesondere zeigt Fig. 13 das Setup einer BPP-Bestückungsstation - Befüllstation 20 - für einen sequenziellen Bestückungsprozess.

Der Bestückungsprozess der Vertikalabstapler 24 erfolgt dabei sequenziell.

Je nach Taktzeitanforderungen, bzw. Anforderungen hinsichtlich PEMFC-Stack-Ausbringung ist eine Parallelisierung des Bestückungsprozesses durchführbar, siehe Fig. 14.

So können beispielsweise für die parallele Bestückung von zwei Vertikalabstaplern 24, zum Ende des Bestückungsprozesses auch zwei leere, zur Bestückung bereite Vertikalabstapler 24 in der Befüllstation 20 vorgehalten werden.

Ein beispielhafter Aufbau ist schematisch mit vier leeren Vertikalabstaplern 24 in Fig. 14 dargestellt. Insbesondere zeigt Fig. 14 das Setup der BPP-Bestückungsstation - Befüllstation 20 - für einen parallel-sequenziellen Bestückungsprozess. An der Anlieferungseinrichtung 26 sind die erste bis vierte Aufnahmeeinheit 52a-52d in Anlieferungsrichtung 140 hintereinander vorgesehen.

Der Bestückungsprozess der Vertikalabstapler 24 erfolgt dabei parallel-sequenziell.

Die einfache, modulare Erweiterungsmöglichkeit des gesamten BPP-Zuführbands 38 ermöglicht, parallel zur variablen Anzahl an BPP 17 im Vertikalabstapler 24 eine Anpassung angesichts sämtlicher Anforderungen für PEMFC-Stack-Zellzahl und PEMFC-Stack-Ausbringungsmenge.

Im Folgenden wird anhand der Darstellung in Fig. 5 und 6 die Entleerung des Vertikalabstaplers 24 und die Einbringung der BPP 17 in den Stack erläutert.

Fig. 5 zeigt eine perspektivische Ansicht der Stapelstation 12 mit mehreren Stapelvorrichtungen 32. Ausgangssituation für die Entleerung Vertikalabstaplers 24 ist, dass der vollständig bestückte Vertikalabstapler 24 über der Stapelvorrichtung 32 in der Stapelstation 12 durch Nullpunktspannsysteme positioniert und fixiert ist, wie dies in Fig. 5 gezeigt ist. Die Aufnahmeeinheit 50 der Stapelstation 12 ist analog zu den oben beschriebenen Aufnahmeeinheiten 52, 52a-52d der Befüllstation 20 ausgeführt. Insbesondere zeigt Fig. 5 die Ausgangssituation für die Entleerung des Vertikalabstaplers 24.

Der Vertikalabstapler 24 wird durch die Aufnahmeeinheiten 50, 52, 52a-52d lotrecht positioniert, so dass eine Auf- und Abbewegung der ersten Zellkomponenten 16 in dem Vertikalabstapler 24 senkrecht, parallel zur Gewichtskraft erfolgt.

Die in Fig. 5 gezeigte Ausgangssituation beinhaltet auch, dass ggf. entstandene N.i.O-Lücken gefüllt sind und dass alle sich innerhalb des Vertikalabstapler 24 befindlichen BPP 17 im Rahmen des zulässigen Toleranzfelds positioniert sind.

Für die Entleerung des Vertikalabstaplers 24 ist lediglich das Lösen des Sperr- oder Bremssystems 114 sowie die Umkehrung der Antriebsrichtung beider Zahnriemenpaare 46a, 46b, entgegen der während des Bestückungsprozesses verwendeten Rotationsrichtung, erforderlich.

Dadurch werden die BPP 17 nach unten, in Richtung der Stapelvorrichtung 32 transportiert, wo sie dann im Wechsel mit den MEA-Komponenten zu einem PEMFC-Stack aufgebaut werden.

Dieser Vorgang erfolgt, analog zum Bestückungsvorgang, je nach Anwendungsfall taktend oder kontinuierlich. Durch die konstruktiven Gegebenheiten des Vertikalabstaplers 24 ist die Ablage der BPP 17 auf dem wachsenden PEMFC-Stack mit sehr geringen Distanzen umsetzbar, was den Komponentenschutz, die damit verbundene Prozesssicherheit des Stapelvorgangs und das Taktzeitpotenzial des Gesamtprozesses erhöht. Zudem kann durch diesen Aufbau des Vertikalabstaplers 24 die definierte Zeit zur Fertigung einer Einzelzelle (BPP + MEA), welche aus den Anforderungen des jeweiligen Kunden hervorgeht, auf den Ablageprozess der einzelnen Komponente angepasst werden. Das bedeutet, sollten beispielsweise für die Ablage der MEA 19 70% der Taktzeit für die Ablage einer Einzelzelle (BPP + MEA = 100 %) benötigt werden, so kann der Vertikalabstapler 24 mit Hilfe der in der Steuerung 76 implementierten Software auf diese Situation stufenlos angepasst werden. Durch weitere Prozessüberwachungssysteme ist es zusätzlich möglich, einen "lernenden" Prozess zu kreieren, der auf entsprechende Tendenzen während des Stapelvorgangs reagieren kann.

Durch diese Eigenschaften ist zudem die eingangs beschriebene stufenlos einstellbare Systemgeschwindigkeit für eine Umsetzung der Skalierbarkeit hinsichtlich der Ausbringungsmenge gegeben.

Die Funktion des BPP-Zuführbands 38 ist es, die BPP 17 direkt vom vorgelagerten Fertigungs-und Prüfprozess, ohne einen weiteren Zwischenschritt bzw. ohne weitere Handlingsoperation aufzunehmen und dem Vertikalabstapler 24 zuzuführen.

Als Zwischenschritt wäre dabei beispielsweise eine Einlagerung der BPP 17 in Magazinen samt dem zugehörigen Entnahmeprozess zu sehen.

Wie unten beschrieben ist durch die Variabilität der Zellkomponentenabstapeleinrichtung 22 - mit BPP-Zuführband 38 und Vertikalabstapler 24 - der Betrieb auch mit Zwischenschritt möglich, wodurch jedoch signifikante Vorteile, wie z.B. Taktzeitpotenzial und Komponentenschutz entfallen.

Vorteilhaft für den Betrieb der Anlieferungseinrichtung 26 in Kombination mit dem Vertikalabstapler 24 ist ein kontinuierlicher Materialfluss. Der Hintergrund dazu ist, dass es sich bei dem Fertigungs- und Prüfprozess der BPP 17 um einen trägen Prozess handelt, der mit gleichbleibender Prozessgeschwindigkeit erfolgen sollte. Ein permanentes Stoppen und wieder Anfahren ist unvorteilhaft und sollte vermieden werden.

Variabilität der Zellkomponentenabstapeleinrichtung 22:
Die Zellkomponentenabstapeleinrichtung 22 kann jedoch ebenfalls als "Zwischenlösung" hinsichtlich der PEMFC-Stack-Ausbringung verwendet werden.

Als "Zwischenlösung" wird dabei der Betrieb des Vertikalabstaplers bei einer BPP-Materialzuführung aus konventionellen Vorratsmagazinen gesehen.

Diese Systemflexibilität ist insofern attraktiv, da aktuell für die Produktion von sehr geringen Stückzahlen an PEMFC-Stacks die BPP 17 häufig in konventionellen Vorratsmagazinen samt Zwischenlagen bereitgestellt werden.

Unter Verwendung von z.B. einem Roboter in Kombination mit einem Mehrfachgreifer, was dem aktuellen Stand der Technik bei der Zuführung der BPP 17 entspricht, kann die Bestückung des BPP-Zuführbandes 38 durchgeführt werden.

Somit kann ein Ramp-up im Hinblick auf die Stückzahlen an PEMFC-Stacks und dem damit einhergehende Wechsel in der BPP-Materialzuführung von Vorratsmagazin zu direkter Verkettung, ohne Änderung des Systemkerns - Zellkomponentenabstapeleinrichtung 22 - durchgeführt werden.

### Bezugszeichenliste:

- 10: Herstellvorrichtung
- 12: Stapelstation
- 14: Brennstoffzellenschichtaufbau
- 16: erste Zellkomponente
- 17: BPP
- 18: zweite Zellkomponente
- 19: MEA
- 20: Befüllstation
- 22: Zellkomponentenabstapeleinrichtung
- 24: Vertikalabstapler
- 26: Anlieferungseinrichtung
- 28: Vertikalmagazin
- 30: Auf- und Abbewegungseinrichtung
- 32: Stapelvorrichtung
- 34: Seitenzuführsystem
- 36: BPP-Zuführsystem (Beispiel für Zellkomponentenabstapeleinrichtung)
- 38: BPP-Zuführband (Beispiel für Anlieferungseinrichtung)
- 40: Riemen-Abstapler (Beispiel für Vertikalabstapler)
- 42: Führungssystem (Stapelstation)
- 44: Vibrationseinrichtung
- 46: Zahnriemen
- 46a: erster Zahnriemen
- 46b: zweiter Zahnriemen
- 48: Fördermittel
- 48a: erstes Fördermittel
- 48b: zweites Fördermittel
- 50: Aufnahmeeinheit (Stapelstation)
- 52, 52a-52d: Aufnahmeeinheit (Befüllstation)
- 54: Auflagestation
- 56: Entnahmestation
- 58: Pressstation
- 60: Presse
- 60a: erste Presse
- 60b: zweite Presse
- 62a: Transportsystem erste Presse
- 62b: Transportsystem zweite Presse
- 64: Stapelvorrichtung-Transportsystem
- 66: Friktionsanleger
- 68: Vorhaltemagazin
- 70: Hubaktor
- 72: Schubstange
- 74: Grundplatte (Stapelvorrichtung)
- 76: Steuerung
- 78: Steuereinheit
- 80: Führungssystem (Anlieferungseinrichtung)
- 82: Befüllungsband
- 84: selbsttragende Gehäuse- oder Rahmenkonstruktion
- 86: Grundplatte (Vertikalabstapler)
- 88a: erstes Lagerschild
- 88b: zweites Lagerschild
- 90: Abschlussplatte
- 92: Versteifung
- 92a: Querversteifung
- 92b: Diagonalversteifung
- 94a: erste vertikal verlaufende Seite
- 94b: zweite vertikal verlaufende Seite
- 94c: dritte vertikal verlaufende Seite
- 94d: vierte vertikal verlaufende Seite
- 96: Erfassungselement (Mitnehmer)
- 98: Getriebe
- 100: Antriebswelle
- 101a: erste Spanneinheit
- 101b: zweite Spanneinheit
- 102: Umlenkwelle
- 103a: erste Spannwelle
- 103b: zweite Spannwelle
- 104: Ankoppelende (Beispiel für Kupplungsteil auf Seiten des Vertikalabstaplers)
- 106: Aktor (Aufnahmeeinheit)
- 106a: erster Antrieb (beispielsweise Servoantrieb, Beispiel für den Aktor 106)
- 106b: zweiter Antrieb (beispielsweise Servoantrieb, Beispiel für den Aktor 106)
- 108: Positioniereinrichtung
- 110: Passstift
- 112: Positionieröffnung
- 114: Bremssystem
- 116: Reibbremse
- 118: Anlage- und/oder Führungseinrichtung
- 120c: hinteres Führungssystem (Vertikalabstapler)
- 120d: vorderes Führungssystem (Vertikalabstapler)
- 122c: hintere Führungsstange
- 122d: vordere Führungsstange
- 124: (seitliche) Führungsschienen
- 126: Verschlusssystem
- 128: Querstange
- 129: lösbares Eingreifelement
- 130: Antriebssystem für Anlieferbewegung
- 132: Maschinengestell
- 134: Befüllungsbandwelle
- 136: Aktor des Antriebssystems für die Anlieferbewegung
- 138: formschlüssige Erfassungselemente (Mitnehmer) des Befüllungsbands
- 140: Anlieferrichtung
- 142: trichterförmiges Führungssystem (Anlieferungseinrichtung)
- 144: Gestell (Aufnahmeeinheit)
- 146, 146a, 146b: (schaltbare) Kupplung
- 150: modifizierter Zahnriemen
- 154: Antriebswelle (Befüllungsband)
- 156: Spannsystem (Befüllungsband)
- 158: Umlenkwelle (Befüllungsband)
- 160: Gleitführungssystem
- 162a, 162b: Führungsleisten
- 164: paralleles Führungssystem
- 166: Positionsgeber
- H: Hauptvorgang (die Schritte des Hauptvorganges werden in Kästchen mit durchgehender Umrandung dargestellt);
- N/P: Nebenvorgang/Parallelprozess (parallel während des Hauptvorganges ablaufende Schritte eines Nebenvorgangs/Parallelprozesses werden in Kästchen mit gepunkteter Umrandung dargestellt);
- S01: untere Randkomponente in die Stapelvorrichtung einlegen;
- S02: untere Randkomponente in der Stapelvorrichtung fixieren;
- S03: Führungssystem für die Wiederholkomponenten anlegen;
- S04: Stapelvorrichtung an die Stapelposition transportieren;
- S05: untere Randkomponente in Startposition;
- S06: START STAPELVORGANG;
- S07: seitliche Einbringung der MEA durch Feeder;
- S08: lotrechte Einbringung der BPP durch BPP-Zuführsystem;
- S09: Ausrichtung der MEA und BPP am Führungssystem;
- S10: STOP STAPELVORGANG;
- S11: FOLGEPROZESSE;
- S12: Kreislauf der Stapelvorrichtungen;
- P01: Parallelprozess: Einbringung des gefüllten Vertikalabstaplers des BPP-Zuführsystems in die Stapelstation;
- P02: Parallelprozess: Einbringung der MEAs in ein Vorhaltemagazin des Feeders;
- P03: Parallelprozess: gegebenenfalls Unterstützung des Ausrichtvorgangs durch Vibrations;
- P04: Parallelprozess: Höhenausgleich der Stapelvorrichtung für konstante Ablageposition;
- N01: Vertikalabstapler über der Stapelposition ausgerichtet, fixiert und für die Vereinzelung bereit;
- N02: MEA-Vorhaltemagazin definiert gefüllt, MEAs positioniert und für die Vereinzelung bereit;
- N03: Alternierende Einbringung von BPP und MEA bis zum Erreichen der geforderten Zellzahl;
- N04: Taktzeitvariation zwischen MEA-Einbringung und BPP-Einbringung möglich;
- N05: Abtransport der Stapelvorrichtung aus der Stapelstation, Weitertransport der Stapelvorrichtung zu den Folgeprozessen.

## Patentansprüche

1. Zellkomponentenabstapeleinrichtung (22) zum vertikalen Abstapeln vereinzelter Zellkomponenten (16) an einer Stapelstation (12) im Zuge des Herstellens eines Brennstoffzellenschichtaufbaus (14), umfassend
wenigstens einen Vertikalabstapler (24) mit einem Vertikalmagazin (28) zum Aufnehmen einer Mehrzahl der Zellkomponenten (16) in einer vertikalen Anordnung und mit einer Auf- und Abbewegungseinrichtung (30) zum Auf- und Abbewegen der Zellkomponenten (16) in dem Vertikalmagazin (28) und zum Abstapeln vereinzelter Zellkomponenten (16) in vertikaler Richtung, einer Anlieferungseinrichtung (26) zum Anliefern vereinzelter Zellkomponenten (16) an einer Befüllstation (20) zu dem Vertikalabstapler (24),
wobei der Vertikalabstabler (24) dazu ausgebildet ist, an der Befüllstation (20) das Vertikalmagazin (28) durch einzelnes Aufnehmen der Zellkomponenten (16) und Bewegen mittels der Auf- und Abbewegungseinrichtung (30) zu befüllen, und
wobei der Vertikalabstapler (24) weiter dazu ausgebildet ist, zwischen der Befüllstation (20) und der Stapelstation (12) bewegt zu werden und an der Stapelstation (12) die Zellkomponenten (16) einzeln durch Abwärtsbewegen in vertikaler Richtung abzugeben.

2. Zellkomponentenabstapeleinrichtung (22) nach Anspruch 1,
wobei der Vertikalabstapler (24) durch wenigstens eines oder mehrere der folgenden Merkmale gekennzeichnet ist:
2.1 eine selbsttragende Gehäuse- oder Rahmenkonstruktion (84),
2.2 wenigstens ein an einer ersten Seite (94a) des Vertikalmagazins (28) in vertikaler Richtung bewegbares erstes Fördermittel (48a) und wenigstens ein an einer der ersten Seite (94a) gegenüberliegenden zweiten Seite (94b) in vertikaler Richtung synchron bewegbares zweites Fördermittel (48b), wobei die Fördermittel (48a, 48b) jeweils eine Reihe von Erfassungselementen (96) zum Erfassen und Stützen der Zellkomponenten (16) aufweisen;
2.3 wenigstens einen an einer ersten Seite (94a) des Vertikalmagazins (28) in einer vertikalen Richtung bewegbaren ersten Zahnriemen (46a) und wenigstens einen an einer der ersten Seite (94a) gegenüberliegenden zweiten Seite (94b) in einer vertikalen Richtung synchron bewegbaren zweiten Zahnriemen (46b),
2.3 einen Aktor zum Antreiben der Auf- und Abbewegung oder ein Kupplungsteil (104) zum Ankoppeln eines Aktors (106, 106a, 106b) zum Antreiben der Auf- und Abbewegung,
2.4 eine Positioniereinrichtung (108) zum Positionieren des Vertikalmagazins (28) an der Befüllstation (20) und/oder an der Stapelstation (12);
2.5 ein Sperr- oder Bremssystem (114) zum Sperren oder Bremsen zumindest der Abwärtsbewegung der Zellkomponenten (16) in dem Vertikalmagazin (28),
2.6 wenigstens eine Anlage- und/oder Führungseinrichtung (118) zum Positionieren und/oder Führen der Zellkomponenten (16) beim Füllen und/oder Auf- und Abbewegen;
2.7 eine zumindest bereichsweise trichterförmige vertikale Führungseinrichtung (120) zum Positionieren der Zellkomponenten (16) beim Anliefern oder Füllen;
2.8 ein Verschlusssystem (126) zum lösbaren Fixieren der oder wenigstens einer Anlage-und/oder Führungseinrichtung (118);
2.9 dass das Vertikalmagazin (28) im Wesentlichen quaderförmig ausgebildet ist, dass an einer ersten (94a) und dieser gegenüberliegenden zweiten (94b) vertikal verlaufenden Seite des Vertikalmagazins (28) die Auf- und Abbewegungseinrichtung (30) angeordnet ist, dass an einer zu der ersten (94a) und zweiten (94b) quer verlaufenden dritten (94c) und/oder vierten (94d) vertikal verlaufenden Seite wenigstens eine Anlage- oder Führungseinrichtung (118) entfernbar angeordnet ist, gegen die die in dem Vertikalmagazin (28) aufgenommenen Zellkomponenten (16) anliegen.

3. Zellkomponentenabstapeleinrichtung (22) nach einem der voranstehenden Ansprüche, wobei die Anlieferungseinrichtung (26) durch wenigstens eines oder mehrere der folgenden Merkmale gekennzeichnet ist:
3.1 wenigstens eine Aufnahmeeinheit (52, 52a-52d) zum positionierten Aufnehmen des Vertikalabstaplers (24),
3.2 eine oder mehrere weitere Aufnahmeeinheiten (52a-52d) zum positionierten Aufnehmen je eines weiteren Vertikalabstaplers (24),
3.3 ein Zuführfördermittel (82) zum seitlichen Anliefern der Zellkomponenten (16) zu dem wenigstens einen Vertikalabstapler (24),
3.4 ein zumindest bereichsweise trichterförmiges Führungssystem (142) zum Positionieren der Zellkomponenten (16) in Richtung quer zur Anlieferrichtung (140) beim Anliefern,
3.5 eine Reihe formschlüssiger Erfassungselemente (138), die zum formschlüssigen Erfassen der Zellkomponenten (16) ausgebildet und zum Anliefern der Zellkomponenten (16) hin zu dem Vertikalabstapler (24) bewegbar sind,
3.6 ein Antriebssystem (130) für die Anlieferbewegung;
3.7 wenigstens einen Aktor (106, 106a, 106b) zum Antreiben der Auf- und Abbewegung der Zellkomponenten (16) in dem Vertikalmagazin (28) und wenigstens eine vorzugsweise schaltbare Kupplung (146, 146a, 146b) zum Koppeln des Aktors (106, 106a, 106b) mit der Auf- und Abbewegungseinrichtung (30) des wenigstens einen Vertikalabstaplers (24);
3.8 dass die Anlieferungseinrichtung (26) dazu ausgebildet ist, einen ersten Vertikalabstapler (24) an einer ersten Aufnahmeeinheit (52a) und einen zweiten Vertikalabstapler (24) an einer zweiten Aufnahmeeinheit (52b) aufzunehmen und nacheinander zu befüllen;
3.9 dass die Anlieferungseinrichtung (26) dazu ausgebildet ist, mehrere Vertikalabstapler (24) an in Anlieferrichtung (140) nacheinander angeordneten Aufnahmeeinheiten (52a-52d) parallel zu befüllen;
3.10 dass die Anlieferungseinrichtung (26) dazu ausgebildet ist, den wenigstens einen Vertikalabstapler (24) von oben zu befüllen.

4. Herstellvorrichtung (10) zum Herstellen eines Brennstoffzellenschichtaufbaus (14) mit wechselweise angeordneten platten- oder membranförmig ausgebildeten ersten und zweiten Zellkomponenten (16, 18), umfassend:
eine Stapelstation (12) mit wenigstens einer Stapelvorrichtung (32) zum Aufeinanderstapeln der ersten und der zweite Zellkomponente (16, 18) abwechselnd aufeinander,
einen zwischen wenigstens einer Befüllstation (20) und der Stapelstation (12) bewegbaren Vertikalabstapler (24) zum Aufnehmen einer Mehrzahl von ersten Zellkomponenten (16) in einer vertikalen Anordnung mit einer Auf- und Abbewegungseinrichtung (30) zum Auf- und Abbewegen der ersten Zellkomponenten (16) und zum Abstapeln vereinzelter erster Zellkomponenten (16) in vertikaler Richtung zu der Stapelvorrichtung (32), und
einem Seitenzuführsystem (34) zum seitlichen Zuführen vereinzelter zweiter Zellkomponenten (18) zu der Stapelvorrichtung (32).

5. Herstellvorrichtung (10) nach Anspruch 4, **gekennzeichnet durch** eine Zellkomponentenstapeleinrichtung (22) nach einem der Ansprüche 1 bis 3 zum Bereitstellen des mit ersten Zellkomponenten (16) befüllten Vertikalabstaplers (24).

6. Herstellvorrichtung (10) nach einem der Ansprüche 4 oder 5, **gekennzeichnet durch**
6.1 eine Mehrzahl von Stapelvorrichtungen (32), die im Kreislauf zwischen der Stapelstation (12) und wenigstens einer weiteren Bearbeitungsstation (54, 56, 58) zum Weiterbearbeiten des in der Stapelvorrichtung (32) gestapelten Brennstoffzellenschichtaufbaus (14) bewegbar sind und/oder
6.2 eine Mehrzahl von Vertikalabstaplern (24), die im Kreislauf zwischen einer Aufnahmeeinheit (50) an der Stapelstation (12) und wenigstens einer Aufnahmeeinheit (52, 52a-52d) an der Befüllstation (20) bewegbar sind.

7. Herstellvorrichtung (10) nach einem der Ansprüche 4 bis 6, **gekennzeichnet durch** wenigstens eine oder mehrere der folgenden Stationen:
7.1 eine Auflagestation (54) zum Auflegen von Randkomponenten des Brennstoffzellenschichtaufbaus (14) an der Stapelvorrichtung (32),
7.2 eine Entnahmestation (56) zum Entnehmen des Brennstoffzellenschichtaufbaus (14) aus der Stapelvorrichtung (32),
7.3 wenigstens eine Pressstation (58) mit einer Presse (60, 60a, 60b) zum Pressen des Brennstoffzellenschichtaufbaus (14).

8. Zellkomponentenabstapelverfahren (22) zum vertikalen Abstapeln vereinzelter Zellkomponenten (16) an einer Stapelstation (12) im Zuge des Herstellens eines Brennstoffzellenschichtaufbaus (14), umfassend:
a) Bereitstellen wenigstens eines Vertikalabstaplers (24) mit einem Vertikalmagazin (28) zum Aufnehmen einer Mehrzahl der Zellkomponenten (16) in einer vertikalen Anordnung und mit einer Auf-und Abbewegungseinrichtung (30) zum Auf- und Abbewegen der Zellkomponenten (16) in dem Vertikalmagazin (28) und zum Abstapeln vereinzelter Zellkomponenten (16) in vertikaler Richtung,
b) Füllen des Vertikalabstaplers (24) an einer Befüllstation (20) mit vereinzelten Zellkomponenten (16) unter Bewegung bereits aufgenommener Zellkomponenten (16) in dem Vertikalmagazin,
c) Bewegen des befüllten Vertikalabstaplers (24) zu einer Stapelstation (12),
d) Abwärtsbewegen der Auf- und Abbewegungseinrichtung (30) zum Abstapeln der einzelnen Zellkomponenten (16) an der Stapelstation (12).

9. Zellkomponentenabstapelverfahren nach Anspruch 8, durchgeführt mit einer Zellkomponentenstapeleinrichtung (22) nach einem der Ansprüche 1 bis 3.

10. Zellkomponentenstapelverfahren nach Anspruch 8 oder 9, **gekennzeichnet durch** wenigstens einen oder mehrere der Schritte:
10.1 Positionieren der Zellkomponenten (16) in Richtung quer zu einer Anlieferrichtung (140) beim Zuführen der Zellkomponenten (16) zu dem Vertikalabstapler (24) in Schritt b);
10.2 Positionieren der Zellkomponenten (16) in Anlieferrichtung beim Aufwärtsbewegen der Zellkomponenten (16) in dem Vertikalstapler (24);
10.3 Prüfen der Zellkomponenten (16) und Entfernen einer fehlerhaften Zellkomponente (16) an der Befüllstation (20) oder beim Zuführen zu der Befüllstation (20);
10.4 Einfügen einer Zellkomponente (16) auf einer aufgrund eines Entfernens einer fehlerhaften Zellkomponente (16) leeren Stelle in den Vertikalstapler (24);
10.5 manuelles oder automatisches Betätigen eines Verschlusssystems (126) des Vertikalabstaplers (24) zum Einfügen einer Zellkomponente (16) auf einer aufgrund eines Entfernens einer fehlerhaften Zellkomponente (16) leeren Stelle in den Vertikalstapler (24);
10.6 Bewegen einer neuen Zellkomponente (16) mittels eines Vertikalhandhabungssystems auf die Höhe einer leeren Stelle des Vertikalstaplers (24) zur Füllen derselben;
10.7 Positionieren des Vertikalstaplers (24) mittels einer Positioniereinrichtung (108), insbesondere einer Nullpunktspannvorrichtung, an wenigstens einer Aufnahmeeinheit (52, 52a-52d) der Befüllstation (20) und an einer Aufnahmeeinheit (50) der Stapelstation (12);
10.8 Bereitstellen eines weiteren Vertikalabstaplers (24) an einer weiteren Aufnahmeeinheit (52a-52d) der Befüllstation (20) bereits während des Befüllens des vorherigen Vertikalabstaplers (24);
10.9 paralleles Befüllen mehrerer Vertikalabstapler (24) an unterschiedlichen in Anlieferrichtung (140) aufeinanderfolgender Aufnahmeeinheiten (52a-52d) der Befüllstation (20).

11. Herstellverfahren zum Herstellen eines Brennstoffzellenschichtaufbaus (14) mit wechselweise angeordneten platten- oder membranförmig ausgebildeten ersten und zweiten Zellkomponenten (16, 18), umfassend:
e) Bereitstellen einer Stapelvorrichtung (32) an einer Stapelstation (12),
f) vertikales Abstapeln einer ersten Zellkomponente (16) im Wechsel mit einem seitlichen Zuführen einer zweiten Zellkomponente (18) auf der Stapelvorrichtung (32),
g) Transport der Stapelvorrichtung (32) mit dem so gebildeten Brennstoffzellenschichtaufbau zur Weiterverarbeitung und Entnahme des Brennstoffzellenschichtaufbaus,
h) Rücktransport der Stapelvorrichtung (32) zu der Stapelstation (12).

12. Herstellverfahren nach Anspruch 11, durchgeführt mit einer Herstellvorrichtung (10) nach einem der Ansprüche 4 bis 7.

13. Herstellverfahren nach einem der Ansprüche 11 oder 12, **gekennzeichnet durch** einen oder mehrere der folgenden Schritte:
13.1 Verwenden mehrerer Stapelvorrichtungen (32) und Bewegen der Stapelvorrichtungen (32) im Kreislauf zwischen der Stapelstation (12) und wenigstens einer weiteren Bearbeitungsstation (54, 56, 58);
13.2 Verwenden mehrerer Vertikalabstapler (24) und Bewegen der Vertikalabstapler (24) im Kreislauf zwischen der Stapelstation (12) und Aufnahmeeinheiten der Befüllstation (20).

14. Computerprogramm, umfassend maschinenlesbare Steueranweisungen,
14.1 die, wenn in eine Steuereinheit (78) einer Zellkomponentenabstapeleinrichtung (22) nach einem der Ansprüche 1 bis 3 geladen, diese veranlassen, das Zellkomponentenabstapelverfahren nach einem der Ansprüche 8 bis 10 durchzuführen oder
14.2 die, wenn in eine Steuerung (76) einer Herstellvorrichtung (10) nach einem der Ansprüche 4 bis 7 geladen, diese veranlassen, das Herstellverfahren nach einem der Ansprüche 11 bis 13 durchzuführen.

15. Steuerung (76)
15.1 mit einer Steuereinheit (78) für eine Zellkomponentenabstapeleinrichtung (22) nach einem der Ansprüche 1 bis 3, wobei die Steuereinheit (78) dazu ausgebildet ist, die Zellkomponentenabstapeleinrichtung (22) zum Durchführen des Zellkomponentenabstapelverfahrens nach einem der Ansprüche 8 bis 10 anzusteuern und/oder
15.2 ausgebildet für eine Herstellvorrichtung (10) nach einem der Ansprüche 4 bis 7, wobei die Steuerung (76) dazu eingerichtet ist, die Herstellvorrichtung (10) zum Durchführen des Herstellverfahrens nach einem der Ansprüche 11 bis 13 anzusteuern.

## Claims

1. Cell component stacking device (22) for vertically stacking individual cell components (16) at a stacking station (12) in the course of manufacturing a fuel cell stack (14), comprising
at least one vertical stacker (24) having a vertical magazine (28) for receiving a plurality of the cell components (16) in a vertical arrangement and having an up and down movement device (30) for moving the cell components (16) up and down in the vertical magazine (28) and for stacking individual cell components (16) in a vertical direction,
a delivery device (26) for delivering isolated cell components (16) at a filling station (20) to the vertical stacker (24),
wherein the vertical stacker (24) is adapted to fill the vertical magazine (28) at the filling station (20) by picking up the cell components (16) one by one and moving them by means of the up and down movement device (30), and
wherein the vertical stacker (24) is further adapted to be moved between the filling station (20) and the stacking station (12) and to discharge at the stacking station (12) the cell components (16) one by one by moving them downward in vertical direction.

2. Cell component stacking device (22) according to claim 1,
wherein the vertical stacker (24) is **characterized by** at least one or more of the following features:
2.1. a self-supporting housing or frame structure (84),
2.2 at least one first conveyor means (48a) movable in vertical direction at a first side (94a) of the vertical magazine (28) and at least one second conveyor means (48b) synchronously movable in vertical direction at a second side (94b) opposite to the first side (94a), wherein the conveyor means (48a, 48b) each comprise a row of gripping elements (96) for gripping and supporting the cell components (16);
2.3 at least one first toothed belt (46a) movable in a vertical direction on a first side (94a) of the vertical magazine (28) and at least one second toothed belt (46b) synchronously movable in a vertical direction on a second side (94b) opposite the first side (94a),
2.3 an actuator for driving the up and down movement or a coupling part (104) for coupling an actuator (106, 106a, 106b) for driving the up and down movement,
2.4 a positioning device (108) for positioning the vertical magazine (28) at the filling station (20) and/or at the stacking station (12);
2.5 a locking or braking system (114) for locking or braking at least the downward movement of the cell components (16) in the vertical magazine (28),
2.6 at least one abutting and/or guiding device (118) for positioning and/or guiding the cell components (16) during filling and/or upward and downward movement;
2.7 a vertical guiding device (120) funnel-shaped at least in sections for positioning the cell components (16) during delivery or filling;
2.8 a locking system (126) for releasably fixing the or at least one feed and/or guide device (118);
2.9 in that the vertical magazine (28) is essentially cuboidal in shape, in that the up and down movement device (30) is arranged on a first side (94a) of the vertical magazine (28) and on a second side (94b) of the vertical magazine (28) opposite the first side (94a), in that at least one abutting or guide device (118), against which the cell components (16) accommodated in the vertical magazine (28) rest, is removably arranged on a third (94c) and/or fourth (94d) side running vertically transversely to the first (94a) and second side (94b).

3. Cell component stacking device (22) according to one of the preceding claims, wherein the delivery device (26) is **characterized by** at least one or more of the following features:
3.1 at least one receiving unit (52, 52a-52d) for receiving the vertical stacker (24) in a positioned manner,
3.2 one or more further receiving units (52a-52d) for the positioned reception of a further vertical stacker (24) in each case,
3.3 a feed conveyor (82) for lateral delivery of the cell components (16) to the at least one vertical stacker (24),
3.4 a guide system (142) funnel-shaped at least in sections for positioning the cell components (16) in a direction transverse to the delivery direction (140) during delivery,
3.5 a series of form-fitting gripping elements (138), which are designed for form-fitting gripping of the cell components (16) and are movable towards the vertical stacker (24) for delivery of the cell components (16),
3.6 a drive system (130) for the delivery movement;
3.7 at least one actuator (106, 106a, 106b) for driving the up and down movement of the cell components (16) in the vertical magazine (28) and at least one preferably switchable coupling (146, 146a, 146b) for coupling the actuator (106, 106a, 106b) with the up and down movement device (30) of the at least one vertical stacker (24);
3.8 in that the delivery device (26) is designed to receive a first vertical stacker (24) at a first receiving unit (52a) and a second vertical stacker (24) at a second receiving unit (52b) and to fill them one after the other;
3.9 in that the delivery device (26) is designed to fill a plurality of vertical stackers (24) in parallel at receiving units (52a-52d) arranged one after the other in the delivery direction (140);
3.10 in that the delivery device (26) is designed to fill the at least one vertical stacker (24) from above.

4. Manufacturing device (10) for manufacturing a fuel cell stack (14) with alternately arranged plate-shaped or membrane-shaped first and second cell components (16, 18), comprising:
a stacking station (12) with at least one stacking device (32) for stacking the first and second cell components (16, 18) alternately on top of each other,
a vertical stacker (24) movable between at least one filling station (20) and the stacking station (12) for receiving a plurality of first cell components (16) in a vertical arrangement, comprising an up and down movement device (30) for moving the first cell components (16) up and down and for stacking isolated first cell components (16) in vertical direction to the stacking device (32), and
a lateral feed system (34) for laterally feeding isolated second cell components (18) to the stacking device (32).

5. Manufacturing device (10) according to claim 4, **characterized by** a cell component stacking device (22) according to any one of claims 1 to 3 for providing the vertical stacker (24) filled with first cell components (16).

6. Manufacturing apparatus (10) according to any one of claims 4 or 5,
**characterized by**
6.1 a plurality of stacking devices (32) which are movable in a circuit between the stacking station (12) and at least one further processing station (54, 56, 58) for further processing of the fuel cell stack (14) stacked in the stacking device (32) and/or
6.2 a plurality of vertical stackers (24) which are movable in a circuit between a receiving unit (50) at the stacking station (12) and at least one receiving unit (52, 52a-52d) at the filling station (20).

7. Manufacturing device (10) according to one of claims 4 to 6, **characterized by** at least one or more of the following stations:
7.1 a lay-up station (54) for laying up edge components of the fuel cell stack (14) on the stacking device (32),
7.2 a removal station (56) for removing the fuel cell layer assembly (14) from the stacking device (32),
7.3 at least one pressing station (58) with a press (60, 60a, 60b) for pressing the fuel cell stack (14).

8. Cell component stacking method (22) for vertically stacking isolated cell components (16) at a stacking station (12) in the course of manufacturing a fuel cell stack (14), comprising:
a) providing at least one vertical stacker (24) having a vertical magazine (28) for receiving a plurality of said cell components (16) in a vertical arrangement and having an up and down movement device (30) for moving said cell components (16) up and down in said vertical magazine (28) and stacking isolated cell components (16) in a vertical direction,
b) filling the vertical stacker (24) at a filling station (20) with isolated cell components (16) while moving already received cell components (16) in the vertical magazine,
c) moving the filled vertical stacker (24) to a stacking station (12),
d) moving the up and down movement device (30) downward to stack the individual cell components (16) at the stacking station (12).

9. Cell component stacking method according to claim 8, performed with a cell component stacking device (22) according to any one of claims 1 to 3.

10. Cell component stacking method according to claim 8 or 9, **characterized by** at least one or more of the steps:
10.1 positioning the cell components (16) in a direction transverse to a delivery direction (140) when feeding the cell components (16) to the vertical stacker (24) in step b);
10.2 positioning the cell components (16) in the direction of delivery when moving the cell components (16) upward in the vertical stacker (24);
10.3 inspecting the cell components (16) to remove a defective cell component (16) at the filling station (20) or while feeding to the filling station (20);
10.4 inserting a cell component (16) into a location in the vertical stacker (24) that is empty due to removal of a defective cell component (16);
10.5 manually or automatically actuating a shutter system (126) of the vertical stacker (24) to insert a cell component (16) into a location in the vertical stacker (24) that is empty due to removal of a defective cell component (16);
10.6 moving a new cell component (16) by means of a vertical handling system to the level of an empty location of the vertical stacker (24) for filling the same;
10.7 positioning the vertical stacker (24) by means of a positioning device (108), in particular a zero point clamping device, at at least one receiving unit (52, 52a-52d) of the filling station (20) and at a receiving unit (50) of the stacking station (12);
10.8 providing a further vertical stacker (24) at a further receiving unit (52a-52d) of the filling station (20) already during the filling of the previous vertical stacker (24);
10.9 parallel filling of several vertical stackers (24) at different receiving units (52a-52d) of the filling station (20) following one another in the delivery direction (140).

11. Manufacturing method for manufacturing a fuel cell stack (14) with alternately arranged plate- or membrane-shaped first and second cell components (16, 18), comprising:
e) providing a stacking device (32) at a stacking station (12),
f) vertically stacking a first cell component (16) alternately with laterally feeding a second cell component (18) on the stacking device (32),
g) transport of the stacking device (32) with the fuel cell stack thus formed for further processing and removal of the fuel cell stack,
h) transporting the stacking device (32) back to the stacking station (12).

12. Manufacturing method according to claim 11, carried out with a manufacturing device (10) according to any one of claims 4 to 7.

13. Manufacturing method according to one of claims 11 or 12, **characterized by** one or more of the following steps:
13.1 using a plurality of stacking devices (32) and moving the stacking devices (32) in circulation between the stacking station (12) and at least one further processing station (54, 46, 58);
13.2 using a plurality of vertical stackers (24) in circulation between the stacking station (12) and receiving units of the filling station (20).

14. Computer program comprising machine-readable control instructions,
14.1 which, when loaded into a control unit (78) of a cell component stacking device (22) according to any one of claims 1 to 3, cause the cell component stacking device (22) to perform the cell component stacking procedure according to any one of claims 8 to 10, or
14.2 which, when loaded into a controller (76) of a manufacturing apparatus (10) according to any one of claims 4 to 7, cause the same to perform the manufacturing process according to any one of claims 11 to 13.

15. Controller (76)
15.1 comprising a control unit (78) for a cell component stacking device (22) according to any one of claims 1 to 3, wherein the control unit (78) is adapted to control the cell component stacking device (22) to perform the cell component stacking process according to any one of claims 8 to 10 and/or
15.2 adapted for a manufacturing device (10) according to any one of claims 4 to 7, wherein the controller (76) is adapted to control the manufacturing device (10) to perform the manufacturing process according to any one of claims 11 to 13.

## Revendications

1. Dispositif d'empilage de composants de pile (22) pour l'empilage vertical de composants de pile (16) individuels à un poste d'empilage (12) au cours de la fabrication d'une structure en couche de pile à combustible (14), comprenant au moins un empileur vertical (24) avec un magasin vertical (28) pour recevoir une pluralité de composants de pile (16) dans une disposition verticale et avec un dispositif de mouvement de montée et de descente (30) pour déplacer vers le haut et vers le bas les composants de pile (16) dans le magasin vertical (28) et pour empiler des composants de pile (16) individuels dans la direction verticale,
un dispositif de livraison (26) pour livrer des composants de pile (16) individuels à un poste de remplissage (20) vers l'empileur vertical (24),
l'empileur vertical (24) étant conçu pour remplir le magasin vertical (28) au niveau du poste de remplissage (20) en prenant les composants de pile (16) individuellement et en les déplaçant au moyen du dispositif de mouvement de montée et de descente (30), et
dans lequel l'empileur vertical (24) est en outre conçu pour être déplacé entre le poste de remplissage (20) et le poste d'empilage (12) et pour décharger les composants de pile (16) individuellement au niveau du poste d'empilage (12) en les déplaçant vers le bas dans la direction verticale.

2. Dispositif d'empilage de composants de pile (22) selon la revendication 1, dans lequel l'empileur vertical (24) est **caractérisé par** au moins une ou plusieurs des caractéristiques suivantes:
2.1 une construction de boîtier ou de cadre autoportante (84),
2.2. au moins un premier moyen de transport (48a) mobile dans le sens vertical sur un premier côté (94a) du magasin vertical (28) et au moins un deuxième moyen de transport (48b) mobile de manière synchrone dans le sens vertical sur un deuxième côté (94b) opposé au premier côté (94a), les moyens de transport (48a, 48b) présentant chacun une série d'éléments de saisie (96) pour saisir et soutenir les composants de pile (16);
2.3 au moins une première courroie dentée (46a) mobile dans une direction verticale sur un premier côté (94a) du magasin vertical (28) et au moins une deuxième courroie dentée (46b) mobile de manière synchrone dans une direction verticale sur un deuxième côté (94a) opposé au premier côté (94a),
2.3 un actionneur pour entraîner le mouvement de montée et de descente ou une pièce d'accouplement (104) pour coupler un actionneur (106, 106a, 106b) pour entraîner le mouvement de montée et de descente,
2.4 un dispositif de positionnement (108) pour positionner le magasin vertical (28) au niveau du poste de remplissage (20) et/ou au niveau du poste d'empilage (12);
2.5 un système de blocage ou de freinage (114) pour bloquer ou freiner au moins le mouvement descendant des composants de pile (16) dans le magasin vertical (28),
2.6 au moins un dispositif d'appui et/ou de guidage (118) pour positionner et/ou guider les composants de pile (16) lors du remplissage et/ou du mouvement de montée et de descente;
2.7 un dispositif de guidage vertical (120) en forme d'entonnoir, au moins par zones, pour positionner les composants de pile (16) lors de l'amenée ou du remplissage;
2.8 un système de fermeture (126) pour fixer de manière amovible le ou au moins un dispositif d'installation et/ou de guidage (118);
2.9 en ce que le magasin vertical (28) est réalisé sensiblement en forme de parallélépipède, en ce que le dispositif de montée et de descente (30) est disposé sur un premier côté (94a) et sur un deuxième côté (94b) du magasin vertical (28) qui s'étend verticalement en face du premier, qu'au moins un dispositif d'appui ou de guidage (118) est disposé de manière amovible sur un troisième (94c) et/ou un quatrième (94d) côté s'étendant verticalement et transversalement au premier (94a) et au deuxième (94b) côté, contre lequel les composants de pile (16) logés dans le magasin vertical (28) s'appuient.

3. Dispositif d'empilage de composants de pile (22) selon l'une des revendications précédentes, le dispositif de livraison (26) étant **caractérisé par** au moins une ou plusieurs des caractéristiques suivantes:
3.1 au moins une unité de réception (52, 52a-52d) pour la réception positionnée de l'empileur vertical (24),
3.2 une ou plusieurs autres unités de réception (52a-52d) pour la réception positionnée de respectivement un autre empileur vertical (24),
3.3 un moyen de transport d'alimentation (82) pour amener latéralement les composants de pile (16) à l'au moins un empileur vertical (24),
3.4 un système de guidage (142) en forme d'entonnoir, au moins par endroits, pour positionner les composants de pile (16) dans une direction transversale à la direction de livraison (140) lors de la livraison,
3.5 une série d'éléments de saisie (138) à engagement positif, qui sont conçus pour la saisie à engagement positif des composants de pile (16) et qui peuvent être déplacés vers l'empileur vertical (24) pour la livraison des composants de pile (16),
3.6 un système d'entraînement (130) pour le mouvement de livraison;
3.7 au moins un actionneur (106, 106a, 106b) pour entraîner le mouvement de montée et de descente des composants de pile (16) dans le magasin vertical (28) et au moins un couplage (146, 146a, 146b), de préférence commutable, pour coupler l'actionneur (106, 106a, 106b) au dispositif de mouvement de montée et de descente (30) de l'au moins un empileur vertical (24);
3.8 en ce que le dispositif de livraison (26) est conçu pour recevoir et remplir successivement un premier empileur vertical (24) sur une première unité de réception (52a) et un deuxième empileur vertical (24) sur une deuxième unité de réception (52b);
3.9 en ce que le dispositif de livraison (26) est conçu pour remplir en parallèle plusieurs empileurs verticaux (24) sur des unités de réception (52a-52d) disposées les unes après les autres dans la direction de livraison (140);
3.10 en ce que le dispositif de livraison (26) est conçu pour remplir par le haut l'au moins un empileur vertical (24).

4. Dispositif de fabrication (10) pour la fabrication d'une structure en couche de pile à combustible (14) avec des premiers et deuxièmes composants de piles (16, 18) disposés en alternance en forme de plaques ou de membranes, comprenant:
un poste d'empilage (12) avec au moins un dispositif d'empilage (32) pour empiler les premiers et les deuxièmes composants de pile (16, 18) alternativement les uns sur les autres,
un empileur vertical (24) mobile entre au moins un poste de remplissage (20) et le poste d'empilage (20) pour recevoir une pluralité de premiers composants de pile (16) dans une disposition verticale avec un dispositif de mouvement de montée et de descente (30) pour déplacer les premiers composants de pile (16) vers le haut et vers le bas et pour empiler les premiers composants de pile (16) individuels dans la direction verticale vers le dispositif d'empilage (32) et
un système d'alimentation latérale (34) pour l'alimentation latérale de deuxièmes composants cellulaires (18) séparés vers le dispositif d'empilage (32).

5. Dispositif de fabrication (10) selon la revendication 4, **caractérisé par** un dispositif d'empilage de composants de pile (22) selon l'une des revendications 1 à 3 pour la mise à disposition de l'empileur vertical (24) rempli de premiers composants de pile (16).

6. Dispositif de fabrication (10) selon l'une quelconque des revendications 4 ou 5, **caractérisé par**
6.1 une pluralité de dispositifs d'empilage (32) qui peuvent être déplacés en circuit entre le poste d'empilage (12) et au moins un autre poste de traitement (54, 56, 58) pour poursuivre le traitement de l'assemblage de couches de piles à combustible (14) empilé dans le dispositif d'empilage (32) et/ou
6.2 une pluralité d'empileurs verticaux (24) qui sont mobiles en circuit entre une unité de réception (50) au poste d'empilage (12) et au moins une unité de réception (52, 52a-52d) au poste de remplissage (20).

7. Dispositif de fabrication (10) selon l'une quelconque des revendications 4 à 6, **caractérisé par** au moins un ou plusieurs des postes suivants:
7.1 un poste de dépose (54) pour déposer les composants de bord de l'assemblage de couches de piles à combustible (14) sur le dispositif d'empilage (32),
7.2 une station de prélèvement (56) pour prélever l'assemblage de couches de piles à combustible (14) du dispositif d'empilage (32),
7.3 au moins un poste de pressage (58) avec une presse (60, 60a, 60b) pour presser l'assemblage de couches de piles à combustible (14).

8. Procédé d'empilage de composants de piles à combustible (22) pour l'empilage vertical de composants de piles (16) individuels à un poste d'empilage (12) au cours de la fabrication d'un assemblage de couches de piles à combustible (14), comprenant:
a) mise à disposition d'au moins un empileur vertical (24) avec un magasin vertical (28) pour recevoir une pluralité des composants de pile (16) dans une disposition verticale et avec un dispositif de mouvement de montée et de descente (30) pour déplacer les composants de piles (16) vers le haut et vers le bas dans le magasin vertical (28) et pour empiler les composants de cellules (16) individuels dans la direction verticale,
b) remplir l'empileur vertical (24) à un poste de remplissage (20) avec des composants de pile (16) isolés en déplaçant des composants de pile (16) déjà reçus dans le magasin vertical,
c) déplacement de l'empileur vertical (24) rempli vers un poste d'empilage (12),
d) déplacement vers le bas du dispositif de mouvement de montée et de descente (30) pour l'empilage des différents composants de piles (16) au niveau du poste d'empilage (12).

9. Procédé d'empilement de composants pile selon la revendication 8, mis en oeuvre avec un dispositif d'empilement de composants de pile (22) selon l'une quelconque des revendications 1 à 3.

10. Procédé d'empilement de composants de pile selon la revendication 8 ou 9, **caractérisé par** au moins une ou plusieurs des étapes:
10.1 positionnement des composants de piles (16) dans une direction transversale à une direction de livraison (140) lors de l'amenée des composants de pile (16) vers l'empileur vertical (24) à l'étape b);
10.2 positionnement des composants de pile (16) dans la direction de livraison lors du déplacement vers le haut des composants de pile (16) dans l'empileur vertical (24);
10.3 inspecter les composants de pile (16) pour retirer un composant de pile défectueux (16) au niveau du poste de remplissage (20) ou lors de l'alimentation du poste de remplissage (20);
10.4 insertion d'un composant de pile (16) dans l'empileur vertical (24) à un endroit vide en raison d'un retrait d'un composant de pile défectueux (16);
10.5 actionnement manuel ou automatique d'un système de fermeture (126) de l'empileur vertical (24) pour insérer un composant de pile (16) dans l'empileur vertical (24) à un emplacement vide en raison de l'enlèvement d'un composant de pile défectueux (16);
10.6 déplacement d'un nouveau composant de pile (16) au moyen d'un système de manutention verticale au niveau d'un emplacement vide de l'empileur vertical (24) pour le remplir;
10.7 positionnement de l'empileur vertical (24) au moyen d'un dispositif de positionnement (108), en particulier un dispositif de serrage à point zéro, sur au moins une unité de réception (52, 52a-52d) du poste de remplissage (20) et sur une unité de réception (50) du poste d'empilage (12);
10.8 mise à disposition d'un autre empileur vertical (24) sur une autre unité de réception (52a-52d) du poste de remplissage (20) déjà pendant le remplissage de l'empileur vertical précédent (24);
10.9 remplissage parallèle de plusieurs empileurs verticaux (24) aux différentes unités de réception (52a-52d) du poste de remplissage (20) qui se suivent dans le sens de la livraison (140).

11. Procédé de fabrication pour la fabrication d'une structure en couche de pile à combustible (14) avec des premiers et deuxièmes composants de piles (16, 18) disposés en alternance en forme de plaques ou de membranes, comprenant:
e) mise à disposition d'un dispositif d'empilage (32) à un poste d'empilage (12),
f) empilage vertical d'un premier composant de pile (16) en alternance avec une amenée latérale d'un deuxième composant de pile (18) sur le dispositif d'empilage (32),
g) transport du dispositif d'empilage (32) avec la structure de couches de piles à combustible ainsi formé pour la poursuite du traitement et le prélèvement de la structure de couches de piles à combustible,
h) transport de retour du dispositif d'empilage (32) vers la station d'empilage (12).

12. Procédé de fabrication selon la revendication 11, mis en oeuvre avec un dispositif de fabrication (10) selon l'une des revendications 4 à 7.

13. Procédé de fabrication selon l'une quelconque des revendications 11 ou 12, **caractérisé par** une ou plusieurs des étapes suivantes:
13.1 utiliser une pluralité de dispositifs d'empilage (32) et déplacer les dispositifs d'empilage (32) en circuit entre le poste d'empilage (12) et au moins un autre poste de traitement (54, 46, 58);
13.2 utiliser plusieurs empileurs verticaux (24) dans le circuit entre le poste d'empilage (12) et les unités de réception du poste de remplissage (20).

14. Programme informatique comprenant des instructions de commande lisibles par la machine,
14.1 qui, lorsqu'elles sont chargées dans une unité de commande (78) d'un dispositif d'empilement de composants de pile (22) selon l'une quelconque des revendications 1 à 3, lui font exécuter le procédé d'empilement de composants de pile selon l'une quelconque des revendications 8 à 10, ou
14.2 qui, lorsqu'elles sont chargées dans une unité de commande (76) d'un dispositif de fabrication (10) selon l'une quelconque des revendications 4 à 7, amènent ce dispositif à mettre en oeuvre le procédé de fabrication selon l'une quelconque des revendications 11 à 13.

15. Dispositif de commande (76)
15.1 comprenant une unité de commande (78) pour un dispositif d'empilement de composants de pile (22) selon l'une des revendications 1 à 3, l'unité de commande (78) étant configurée pour commander le dispositif d'empilement de composants de pile (22) pour mettre en oeuvre le procédé d'empilement de composants de pile selon l'une des revendications 8 à 10, et/ou
15.2 conçu pour un dispositif de fabrication (10) selon l'une des revendications 4 à 7, le dispositif de commande (76) étant adaptée pour commander le dispositif de fabrication (10) pour la mise en oeuvre du procédé de fabrication selon l'une des revendications 11 à 13.
